(19) Europäisches Patentamt
European Patent Office
Office européen des brevets

(11) **EP 2 136 498 A2**

(12) **EUROPEAN PATENT APPLICATION**

(43) Date of publication:
**23.12.2009 Bulletin 2009/52**

(51) Int Cl.:
***H04L 1/06*** (2006.01)

(21) Application number: **09156115.9**

(22) Date of filing: **25.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **18.06.2008 JP 2008159447**

(71) Applicant: **Fujitsu Limited**
**Kawasaki-shi, Kanagawa 211-8588 (JP)**

(72) Inventor: **Kawasaki,, Toshio**
**Kawasaki-shi, Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **Space-time-coding transmission and reception method and apparatus thereof**

(57) A technique for reducing PAPR in transmitted signals using transmitter diversity. The phase relationship between signal sequences obtained by space-time-coding transmission signals is controlled so as to give a difference in peak power between the signal sequences to be transmitted from separate transmission antennas (21-1, 21-2), and either one or both of the signal sequences are controlled so as to minimize a rate of a peak power of one of the signal sequences to an average transmission power of the signal sequences.

## FIG. 2

EP 2 136 498 A2

**Description**

The present invention related to a transmitter, a receiver, a transmission method and a reception method, and can be used in a technique that performs transmission with a plurality of transmission antennas.

In wireless communication systems, orthogonal frequency multiplexing such as OFDM (Orthogonal Frequency Division Multiplexing), OFDMA (Orthogonal Frequency Division Multiple Access) or the like having excellent use efficiency of frequencies, or orthogonal code multiplexing is sometimes used for the purpose of efficient use of limited wireless resources such as an available frequency band, for example.

Orthogonal frequency multiplexing is a system in which symbol information is mapped on sub-carriers having an orthogonal relationship to each other in the frequency domain and transmitted. On the other hand, orthogonal code multiplexing is a system in which transmission symbols are made orthogonal, with the use of codes having an orthogonal relationship to each other such as Walsh codes, for example, then added (multiplexed) and transmitted.

These multiplexing systems have a disadvantage that a large peak power can be generated depending on the symbol patterns to be multiplexed, which tends to increase peak-to-average power ratio (PAPR).

Meanwhile, a transmission amplifier in a wireless unit in the wireless communication system is required to have a linear characteristic in order to prevent the transmission signal from being distorted. On the other hand, the transmission amplifier is required to be small in size and have high efficiency. In order to satisfy these opposite requirements, it is desired to reduce the PAPR.

As a known technique for reducing PAPR, there is a clipping filter method or the like, which performs a clipping process on signals of an amplitude exceeding a threshold value. In the case of orthogonal frequency multiplexing, there is a frequency domain interleaving method in which symbols to be mapped on sub-carriers are exchanged in order to reduce the PAPR, a PTS (Partial Transmit Sequences) method in which the phase factor of each sub-carrier is controlled so as to reduce the PAPR, etc.

The PTS method divides sub-carriers used for transmission of one OFDM symbol into a plurality of groups (clusters), and gives a different phase rotation to each cluster, which can shift the peak of each sub-carrier to reduce the peak power.

As examples of the above techniques aiming at reduction in PAPR, there are techniques disclosed in Patent Documents 1 to 3 below, for example.

[Patent Document 1] Japanese Laid-open Patent Publication No. 2007-28092
[Patent Document 2] Japanese Laid-open Patent Publication No. 2004-173258
[Patent Document 3] Japanese Laid-open Patent Publication No. 2001-94530

The aforementioned clipping filter method has a disadvantage that clipping more than necessary can cause degradation of the reception characteristic because a non-linear process is performed in the clipping filter method. The frequency domain interleaving method and the PTS method increase the amount of information to be notified to the reception station such as a lot of interleaving information, information about the phase factors, etc.

Meanwhile, investigations have been made into transmitter diversity techniques, in which information is wirelessly transmitted by two or more transmit antennas and received by one or more receive antennas.

Embodiments of the present invention may provide a technique to reduce PAPR in transmitter diversity communication, wherein information is transmitted via a plurality of antennas simultaneously.

Embodiments of the present invention may provide working effects that can not be obtained by the known techniques, which are derived from configurations illustrated in embodiments to be described later.

According to an aspect of the invention, a transmitter includes a plurality of transmission antennas, an encoder that performs space-time-coding on transmission signals to generate signal sequences to be transmitted from the separate transmission antennas, a phase controller that controls a phase relationship between the signal sequences obtained through the space-time-coding so as to give a difference in peak power between a first signal sequence of the signal sequences to be transmitted from a first transmission antenna and a second signal sequence of the signal sequences to be transmitted from a second transmission antenna, a peak power measurement unit that measures peak power of the first and second signal sequences whose phase relationship has been controlled, and a transmission power controller that controls a transmission power of either one or both of the first and second signal sequences based on a result of the measurement so as to minimize a rate of a peak power of one of the signal sequences to an average transmission power of the first and second signal sequences.

According to another aspect of the invention, a receiver receives a signal from a transmitter controlling a phase relationship between a first signal sequence transmitted from a first transmission antenna and a second signal sequence transmitted from a second transmission antenna of signal sequences obtained by performing space-time-coding on transmission signals so as to give a difference in peak power between the first and the second signal sequences, and includes a propagation path estimator that estimates propagation paths from the respective transmission antennas based on known reception signals from the respective transmission antennas, a phase corrector that performs phase correction according to control information about the phase relationship on a result of estimation made by the propagation path estimator, a propagation path compensator that performs propagation path compensation on a signal sequence received by the receiver based on a result of estimation corrected by the phase corrector to separate the signal sequence into signal sequences from the respective transmission antennas, and a decoder that performs addition and subtraction on the signal sequences having undergone the propagation path compensation to decode the signal sequences.

According to a further aspect of the invention, a transmission method includes performing space-time-coding on transmission signals to generate signal sequences to be transmitted from separate transmission antennas, controlling a phase relationship between a first signal sequence to be transmitted from a first transmission antenna and a second signal sequence to be transmitted from a second transmission antenna of the signal sequences obtained through the space-time-coding so as to give a difference in peak power between the first and second signal sequences, measuring peak power of the first and second signal sequences whose phase relationship has been controlled, and controlling transmission power of either one or both of the first and second signal sequences based on a result of measurement so as to minimize a rate of a peak power of one of the signal sequences to an average transmission power of the first and second signal sequences.

According to a still further aspect, a reception method includes receiving a signal from a transmitter controlling a phase relationship between a first signal sequence to be transmitted from a first transmission antenna and a second signal sequence to be transmitted from a second transmission antenna of signal sequences obtained by performing space-time-coding on transmission signals so as to give a difference in peak power between the first and second signal sequences, estimating propagation paths from the respective transmission antennas based on known received signals from the respective transmission antennas, performing phase correction according to control information about the phase relationship on a result of propagation path estimation, performing propagation path compensation on a received signal sequence based on a result of propagation path estimation corrected through the phase correction to separate the received signal sequence into the signal sequences from the respective transmission antennas, and performing addition and subtraction on the signal sequences having undergone propagation path compensation to decode the signal sequences.

An additional aspect of the present invention provides software which, when executed by a processor in wireless transceiver equipment, performs the above transmission method and/or reception method. Such software may be recorded on a computer-readable medium.

The features and advantages of the embodiments will be realized and attained by means of the elements and combinations particularly pointed out in the claims.

It is to be understood that both the foregoing general description and the following detailed description are exemplary and explanatory and are not restrictive of the embodiments, as claimed.

Reference is made, by way of example only, to the accompanying drawings in which:

FIG. 1 is a diagram illustrating an example of configuration of a wireless communication system according to a first embodiment;

FIG. 2 is a diagram schematically illustrating an example of peak power control by a peak power controller illustrated in FIG. 1;

FIG. 3 is a block diagram illustrating an example of configuration (in the case of orthogonal frequency multiplexing) of the peak power controller illustrated in FIG. 1;

FIG. 4 is a diagram schematically illustrating an example of the peak power control by the peak power controller illustrated in FIG. 3;

FIG. 5 is a block diagram illustrating another example of the configuration (in the case of orthogonal code multiplexing) of the peak power controller illustrated in FIG. 1;

FIG. 6 is a diagram schematically illustrating an example of the peak power control by the peak power controller illustrated in FIG. 5;

FIG. 7 is a block diagram illustrating an example of configuration (in the case of orthogonal frequency multiplexing) of a transmitter having the peak power controller illustrated in FIG. 3;

FIG. 8 is a diagram schematically illustrating an example of operation of the transmitter illustrated in FIG. 7;

FIG. 9 is a block diagram illustrating an example of configuration (in the case of orthogonal code multiplexing) of a transmitter having the peak power controller illustrated in FIG. 5;

FIG. 10 is a diagram schematically illustrating an example of operation of the transmitter illustrated in FIG. 9;

FIG. 11 is a block diagram illustrating an example of configuration (in the case of orthogonal frequency multiplexing) of the receiver illustrated in FIG. 1;

FIG. 12 is a block diagram illustrating an example of configurations of propagation path compensators illustrated in FIG. 11;

FIG. 13 is a block diagram illustrating an example of configuration (in the case of orthogonal code multiplexing) of the receiver illustrated in FIG. 1;

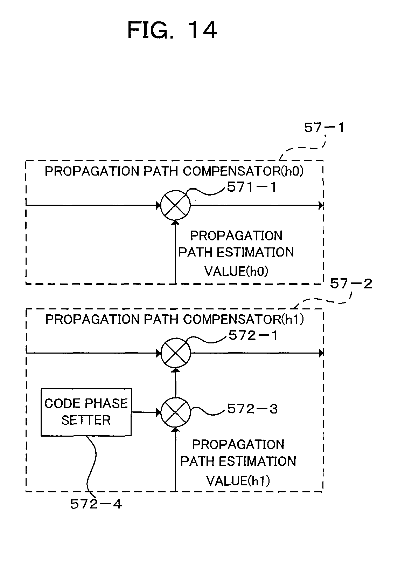

FIG. 14 is a block diagram illustrating an example of configurations of the propagation path compensators illustrated in FIG. 13;

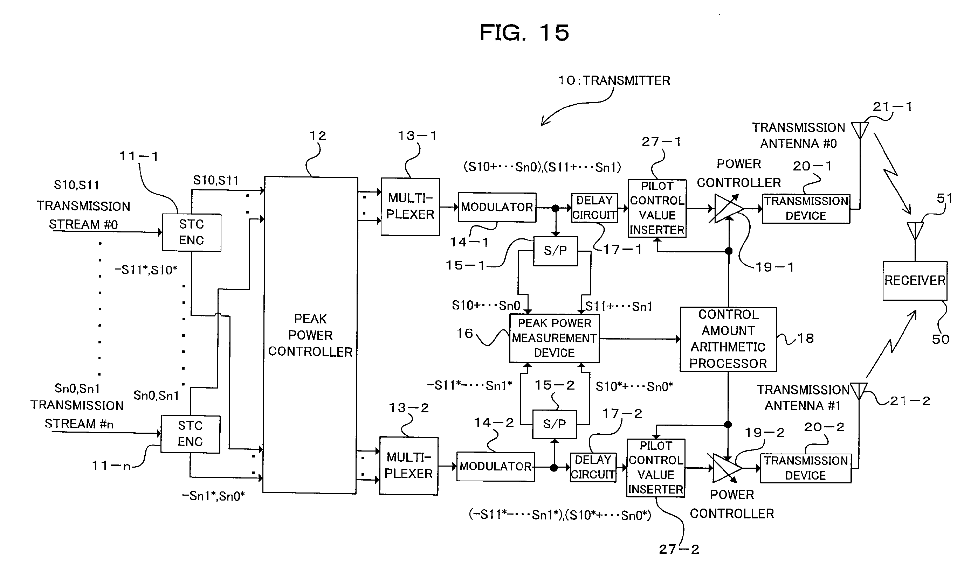

FIG. 15 is a diagram illustrating an example of configuration of a wireless communication system according to a second embodiment;

FIG. 16 is a diagram illustrating an example of a power control value notifying method by the transmitter illustrated in FIG. 15;

FIG. 17 is a block diagram illustrating an example of configuration of the receiver illustrated in FIG. 15;

FIG. 18 is a diagram illustrating an example of configuration of a wireless communication system according to a third embodiment;

FIG. 19 is a diagram schematically illustrating an example of process (in the case where symbols are not exchanged) by a symbol exchanger in the transmitter illustrated in FIG. 18;

FIG. 20 is a diagram schematically illustrating an example of the process (in the case where symbols are exchanged) by the symbol exchanger in the transmitter illustrated in FIG. 18;

FIG. 21 is a diagram illustrating an example of method of notifying of whether symbols have been exchanged or not by the transmitter illustrated in FIG. 18;

FIG. 22 is a block diagram illustrating an example of configuration of the receiver illustrated in FIG. 18;

FIG. 23 is a block diagram illustrating an example of configuration of a wireless communication system according to a fourth embodiment;

FIG. 24 is a diagram schematically illustrating an example of operation of the transmitter illustrated in FIG. 23;

FIG. 25 is a block diagram illustrating an example of configuration of the receiver illustrated in FIG. 23;

FIG. 26 is a diagram illustrating an example of configuration of a wireless communication system according to a fifth embodiment; and

FIG. 27 is a block diagram illustrating an example of configuration of a peak suppressor illustrated in FIG. 26.

Hereinafter, exemplary embodiments will be described with reference to the accompanying drawings. The following exemplary embodiments are merely examples and do not intend to exclude various modifications and variations to the proposed method and/or apparatus that are not specifically described herein.

[1] First Embodiment

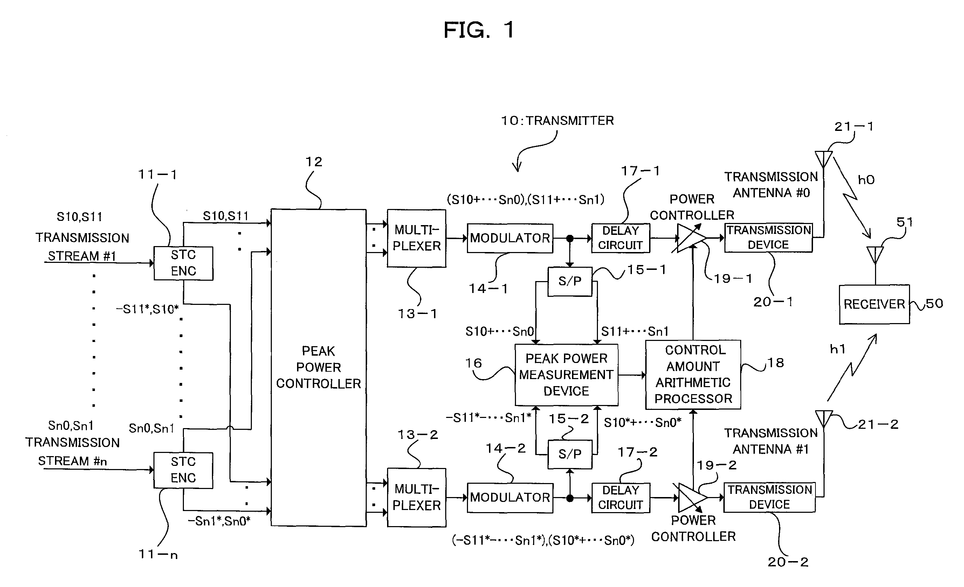

FIG. 1 is a diagram illustrating an example of configuration of a wireless communication system according to a first embodiment. A system illustrated in FIG. 1 has a one or plural wireless transmitters (hereinafter, simply referred to as "transmitter") 10, and one or plural wireless receivers (hereinafter, simply referred to as "receiver") 50.

The transmitter 10 can be used in a transmission system of an entity of a radio access network (RAN) or a transmission system of a wireless user apparatus. The receiver 50 can be used in a receiving system of a wireless user apparatus or a receiving system of an entity of the RAN. These points are the same in the following descriptions. Reference numeral 51 denotes a reception antenna of the receiver 50.

An example of the entity of the RAN is a wireless base station such as BS (Base Station) or eNB (evolved Node B) as proposed in 3GPP LTE. An example of the wireless user apparatus (UE: User Equipment) is a mobile station such as a cellular phone, an information terminal with a wireless interface equivalent to the cellular phone, or the like. Therefore, the UE includes an apparatus that is connected to a RAN to be able to transmit and receive voice or data, or both. The UE may be a fixed wireless apparatus (cellular phone, terminal or the like).

(1.1) Transmitter

The transmitter 10 illustrated in FIG. 1 has two transmission antennas 21-1 and 21-2 (#0, #1) to perform transmitter diversity wireless communication with these transmission antennas 21-1 and 21-2. For this purpose, the transmitter 10 has STC encoders 11-1 to 11-n corresponding to transmission streams #1 to #n in n sequences (n is a natural number), and a peak power controller 12.

The transmitter 10 has multiplexers 13-1 and 13-2, modulators 14-1 and 14-2, serial/parallel (S/P) converters 15-1 and 15-2, delay circuits 17-1 and 17-2, power controllers 19-1 and 19-2 and transmission devices 20-1 and 20-2, correspondingly to the respective transmission antennas 21-1 and 21-2. Further, the transmitter 10 has a peak power measurement device 16 and a control amount arithmetic processor 18.

Hereinafter, the transmission antennas 21-1 and 21-2 will be occasionally referred to as "transmission antenna 21" when not discriminated from one another.

The STC encoders 11-i (i = 1 to n) perform space-time-coding (STC) on a symbol sequence of a transmission stream #i which is input signals. For example, a symbol sequence of the transmission stream #i is encoded into two symbol sequences whose symbol information is to be transmitted from the separate transmission antennas 21-1 and 21-2 at different times, with a plurality (two) of transmission symbols being a unit (block). Such coding is called Alamouti Space-Time Block Coding.

When a transmission signal (symbol) having the symbol number y (= 0, 1, 2, ...) in a transmission stream number x (x = 1, 2, ..., n-1) is expressed as Sxy, for example, two symbols (blocks) expressed as Sxy and Sx(y+1) are encoded into Sxy and Sx(y+1), and -Sy(y+1)* and Sxy* by the aforementioned STC, as illustrated in FIG. 1. Incidentally, A* expresses complex conjugate of A.

The symbol Sxy is transmitted from one transmission antenna (first transmission antenna) #0 at a time t, while transmitted from the other antenna #1 as Sxy* at a time t+1 after one symbol time. Similarly, the symbol Sx(y+1) is transmitted from one transmission antenna (second transmission antenna) #1 as -Sx(y+1)* at a time t, while transmitted from the other transmission antenna #0 at a time t+1 after one symbol time.

Namely, a pair of the two symbols Sxy and -Sx(y+1)* are transmitted from the respective transmission antennas #0 and #1 at a time t, and a pair of the two symbols Sx(y+1) and Sxy* are transmitted from the respective transmission antennas #0 and #1 at a time t+1 after one symbol time. Thus, by transmitting the two transmission symbols from the separate transmission antennas 21 twice for two symbol times, the receiver 50 can obtain a transmitter diversity gain.

When attention is given to two symbols Sxy and Sx(y+1) common to each transmission stream #x, a pair of symbols expressed as [Sxy, -Sx(y+1)*] can be expressed as $(S_0, -S_1^*)$ if inscription of x is omitted and the magnitude of the symbol number is expressed with 1 or 0. Similarly, a pair of symbols expressed as [Sx(y+1) and Sxy*] can be expressed as $(S_1, S_0^*)$. Therefore, inscription of each of symbols $S_0$, $S_0^*$, $S_1$, $-S_1^*$ signifies a symbol block including one symbol or a plurality of symbols.

A pair of symbols transmitted for two symbol times is not limited to the pair illustrated in FIG. 1. For example, when values of wireless propagation paths (channels) from the transmission antennas #0 and #1 to the receiver 50 (reception antenna) are expressed as h0 and h1 and reception signals at the receiver 50 over the respective channels are expressed as r0 and r1, the reception signals at the receiver 50 can be expressed by the following equation (1), where a is a constant, and noise components are omitted.

[Equation 1]

$$\begin{pmatrix} r0 \\ r1 \end{pmatrix} = a \begin{pmatrix} S_0 & -S_1^* \\ S_1 & S_0^* \end{pmatrix} \begin{pmatrix} h0 \\ h1 \end{pmatrix} ...(1)$$

Accordingly, a pair of symbols transmitted for two symbol times may be a combination obtained by exchanging lows or columns for each other in a 4×4 matrix in the equation (1), or a combination obtained by exchanging elements for each other in the principal diagonal in the matrix.

The peak power controller 12 performs a process to give a difference in amplitude value (peak power) between symbols (or symbol blocks) to be transmitted from the separate transmission antennas 21 in symbol sequences of each transmission stream #i that have been space-time-coded as above. In other words, the symbol sequences that have been space-time-coded as above are processed by the peak power controller 12 so as to make a pair of symbols to be transmitted from the separate transmission antennas 21, one of these symbols having a relatively large peak power resulting from multiplexing by the multiplexer 13-1 or 13-2, while the other having a relatively small peak power resulting from multiplexing by the multiplexer 13-1 or 13-2.

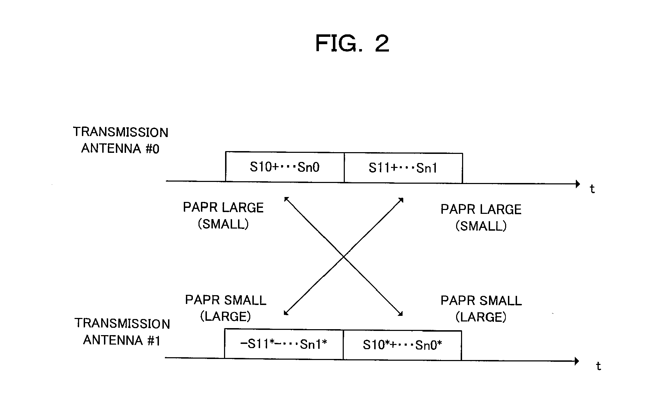

An example of this process is illustrated in FIG. 2. The peak power controller 12 performs a process so that the peak power (PAPR) of a symbol $S_0^*$ to be transmitted from one transmission antenna #1 is relatively smaller (or larger) than the peak power of a symbol $S_0$ to be transmitted from the other transmission antenna #0.

Similarly, the peak power controller 12 performs a process so that the peak power (PAPR) of a symbol $-S_1^*$ to be transmitted from one antenna #1 is relatively smaller (or larger) than the peak power of a symbol $S_1$ to be transmitted from the other antenna #0.

Namely, the peak power controller 12 performs a process so that a difference in peak power is yielded between the two symbols $S_0$ and $S_0^*$ having the same information to be transmitted from the separate transmission antennas #0 and #1. This process can be attained by controlling the phase relationship of the transmission symbols between the separate transmission antennas #0 and #1, for example.

The peak power of each transmission symbol (or symbol block) having undergone the above process is measured at each of the transmission antennas #0 and #1, and the transmission power of either one or both of the transmission signal sequences from the transmission antennas #0 and #1 is controlled so as to minimize the PAPR of each of the transmission antennas #0 and #1 on the basis of a result of the measurement.

For example, when a symbol that has been found to have a higher peak power as a result of the measurement is transmitted from one transmission antenna 21, the transmission power for this symbol is decreased. And, when a symbol that has been found to have a lower peak power as a result of the measurement is transmitted from the other transmission antenna 21, the transmission power for this symbol is increased. On such occasion, it is preferable to equalize the peak powers from the transmission antennas #0 and #1. It is also preferable that a sum of transmission powers of a pair of two symbols transmitted from the separate transmission antennas #0 and #1 is constant (that is, it is preferable to control distribution of the transmission powers of the pair of two transmission symbols).

In wireless communication systems, orthogonal frequency multiplexing using orthogonality of frequency, and orthogonal code multiplexing using orthogonality of code are known as examples of transmission signal multiplexing. In the case of orthogonal frequency multiplexing, the aforementioned peak power control can be attained by controlling phase factors of sub-carriers on which signals (symbols) are transmitted (mapped) for each transmission antenna 21, for example. In the case of orthogonal code multiplexing, the peak power control can be attained by controlling the phase factors of the orthogonal codes for each transmission antenna 21.

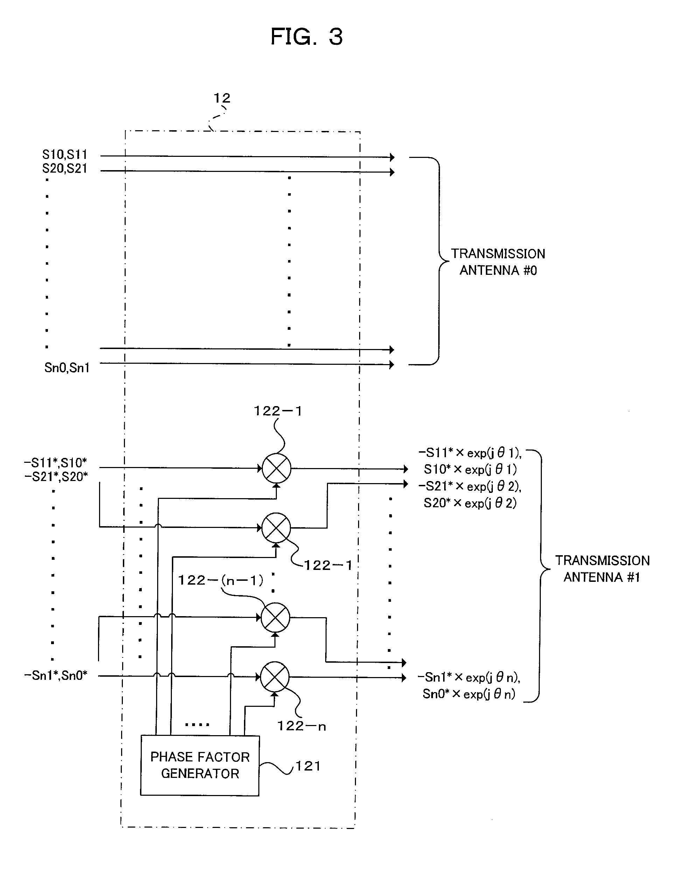

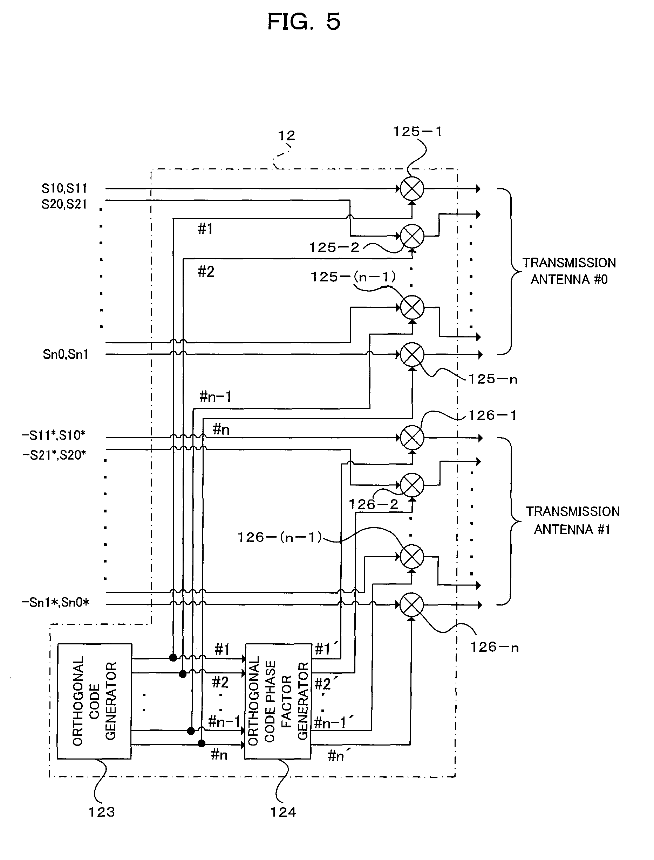

FIG. 3 illustrates an example of configuration of the peak power controller 12 in the case of the orthogonal frequency multiplexing, while FIG. 5 illustrates an example of configuration of the peak power controller 12 in the case of orthogonal code multiplexing. (In the case of orthogonal frequency multiplexing)

The peak power controller 12 illustrated in FIG. 3 controls a phase factor of each sub-carrier so that a signal (symbol) to be transmitted from one transmission antenna #1 differs in peak power from a signal to be transmitted from the other transmission antenna #0.

For this purpose, the peak power controller 12 illustrated in FIG. 3 has complex multipliers 122-1 to 122-n, each of which multiplies a signal (sub-carrier) in the n sequences to be transmitted from the transmission antenna #1 by a phase factor, for example. Further, the peak power controller 12 has a phase factor generator 121 which generates a phase factor for each signal (sub-carrier).

An example of the phase factors of respective sub-carriers are given as $\exp(j\theta1)$, $\exp(j\theta2)$, ... and $\exp(j\theta n)$, as illustrated in FIG. 3. It is preferable that values of $\theta1$ to $\theta n$ be known values between the transmitter 10 and the receiver 50 in order to reduce the amount of information to be notified from the transmitter 10 to the receiver 50, but not limited to this example.

From the peak power controller 12 configured as above, signals to be transmitted from the transmission antenna #0 are outputted to the multiplexer 13-1 as they remain intact. To the contrary, each of signals to be transmitted from the transmission antenna #1 is complex-multiplied by a phase factor $\exp(j\theta i)$ for a corresponding sub-carrier by the complex multiplier 122-i so that the peak power of the signals differs from that of the signals to be transmitted from the transmission antenna #0, and outputted to the multiplier 13-2.

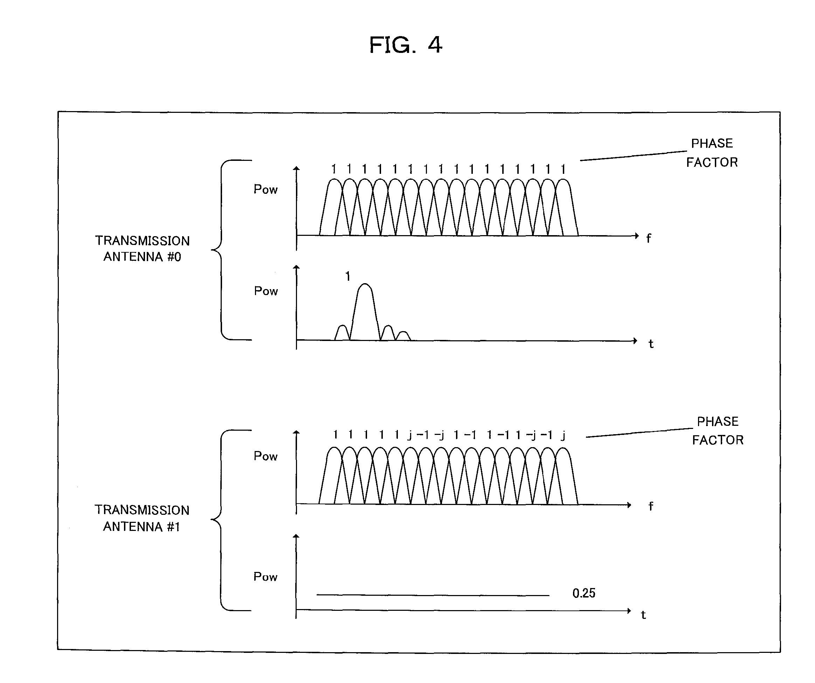

In this case, the signals transmitted from the transmission antenna #0 correspond to a case where the phase factors of all sub-carriers are 1 because the signals are outputted as they remain intact, as illustrated in FIG. 4, for example. Accordingly, in the case where all symbols transmitted from the transmission antenna #0 are 1, a time section in which the peak power is a maximum appears when the signals having been mapped on the sub-carriers are converted to the time domain.

To the contrary, with respect to the signals to be transmitted from the transmission antenna #1, the phase factors for the respective sub-carriers to be given to the complex multipliers 122-i are set as illustrated in FIG. 4, for example. In FIG. 4, attention is given to 16 sub-carriers. When all the symbols are 1, the peak power of the signals is a minimum in the same time section, as compared with the peak power of the signals transmitted from the transmission antenna #0. In other words, the phase factors are set so as to minimize the peak power.

In FIG. 4, since attention is given to only part (16 sub-carriers) of the sub-carriers, omitted are waveforms outside a time section in which the peak power from the transmission antenna #0 is a maximum (that is, the peak power from the transmission antenna #1 is a minimum). When the peak power from the transmission antenna #1 is a maximum in the other time section, the peak power from the transmission antenna #0 is minimized.

In the above example, the phase factor control is performed on a signal on each sub-carrier to be transmitted from the transmission antenna #1. Alternatively, the phase factor control may be performed on a signal on each sub-carrier to be transmitted from the transmission antenna #0. Still alternatively, the phase factor control may be performed on part of the sub-carriers to be transmitted from each of the transmission antennas #0 and #1.

(In the case of orthogonal code multiplexing)

The peak power controller 12 illustrated in FIG. 5 controls a phase factor for each orthogonal code so that a signal (symbol) transmitted from one transmission antenna #1 differs in peak power from a signal transmitted from the other transmission antenna #0.

For this purpose, the peak power controller 12 illustrated in FIG. 5 has an orthogonal code generator 123 and an orthogonal phase factor generator 124, for example. Further, the peak power controller 12 has complex multipliers (orthogonal code multipliers) 125-1 to 125-n for signals in the n sequences to be transmitted from the transmission antenna #0, and complex multipliers 126-1 to 126-n for signals in the n sequences to be transmitted from the transmission antenna #1.

The orthogonal code generator 123 generates orthogonal codes #1 to #n for signals in the n sequences to be transmitted from the transmission antenna #0 and for signals in the n sequences to be transmitted from the transmission antenna #1. As an example of the orthogonal code, there are Walsh code, Gold code, etc.

The orthogonal code phase factor generator 124 multiplies each of the orthogonal codes #1 to #n generated by the orthogonal code generator 123 by a phase factor so that the peak power transmitted from the transmission antenna #1 is lower than the peak power of signals transmitted from the transmission antenna #0. Whereby, orthogonal codes #1' to #n' having undergone the phase control according to the phase factors are generated.

The complex multiplier 125-i complex-multiplies one of the signals in the n sequences to be transmitted from the transmission antenna #0 by an orthogonal code #i generated by the orthogonal code generator 123, and outputs the code to the multiplexer 13-1.

The complex multiplier 126-i complex-multiplies one of the signals in the n sequences to be transmitted from the transmission antenna #1 by an orthogonal code #i' generated by the orthogonal code phase factor generator 124 and having undergone the phase control, and outputs the code to the multiplexer 13-2.

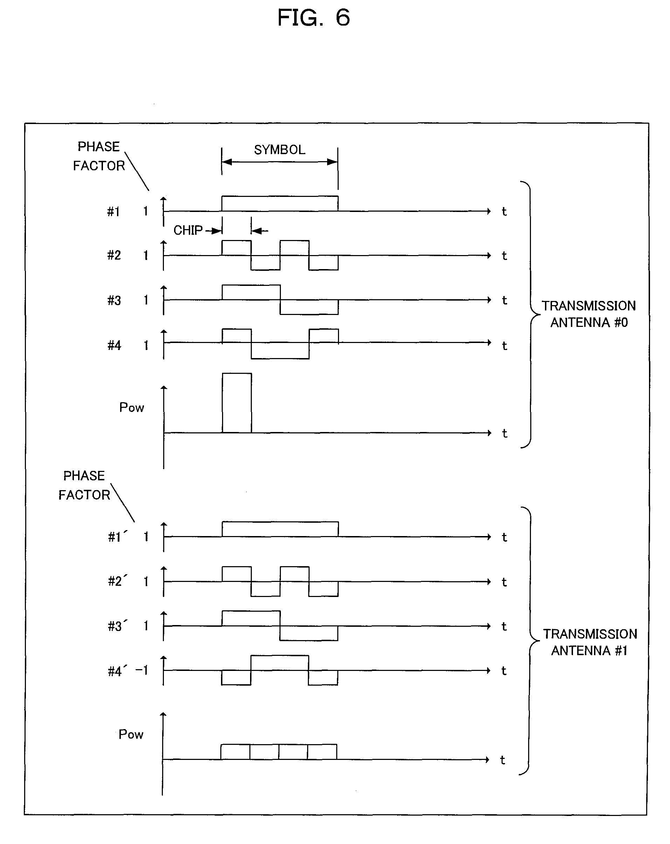

FIG. 6 illustrates an example of operation of the peak power controller 12, giving attention to the orthogonal codes #1 to #4 for four codes. Since the orthogonal codes #1 to #4, by which signals to be transmitted from the transmission antenna #0 are multiplexed, are given to the complex multipliers 125-i as they remain intact, hence phase factors of the orthogonal codes #1 to #4 correspond to 1 (without phase control).

FIG. 6 illustrates a state where the orthogonal codes #1 to #4 are multiplied in each chip time, for example. In this example, the orthogonal code #1 has a code pattern of (1, 1, 1, 1), the orthogonal code #2 a code pattern of (1, -1, 1, -1), the orthogonal code #3 a code pattern of (1, 1, -1, -1) and the orthogonal code #4 a code pattern of (1, -1, -1, 1) in one symbol time (four chip times).

On the other hand, the orthogonal codes #1' to #4', by which signals to be transmitted from the transmission antenna #1 are multiplied, are generated by setting phase factors, which are to be multiplied the orthogonal codes #1 to #4, to 1, 1, 1 and -1 by the orthogonal code phase factor generator 124. Accordingly, the orthogonal codes #1' to #3' are the same as the orthogonal codes #1 to #3, but the orthogonal code #4' is in a pattern obtained by multiplying the orthogonal code #4 by -1. Namely, the orthogonal code #1' has a code pattern of (1, 1, 1, 1), the orthogonal code #2' a code pattern of (1, -1, 1, -1), the orthogonal code #3' a code pattern of (1, 1, -1, -1) and the orthogonal code #4' a code pattern of (-1, 1, 1, -1).

In the case where symbols of all signals to be transmitted from the transmission antenna #0 are 1, when the signals multiplied by the orthogonal codes #1 to #4 are multiplexed, the maximum peak power appears in a chip time that the signals are multiplied by 1 which is the orthogonal code #i more frequently than in the other chip times.

On the other hand, in the case where symbols of all the signals to be transmitted from the transmission antenna #1 are 1, when the signals multiplied by the orthogonal codes #1' to #4' are multiplexed, the number of 1 and the number of -1 multiplied as the orthogonal code #i are averaged in one symbol time. Therefore, the peak power of the signals transmitted from the transmission antenna #1 is minimized in the time domain. In other words, the phase factors are set so that the peak power is minimized.

In FIG. 6, omitted are waveforms obtained outside the time section in which the peak power from the transmission antenna #0 is a maximum (that is, the peak power from the transmission antenna #1 is a minimum). When the peak power from the transmission antenna #1 is a maximum in another time section, the peak power from the transmission antenna #0 is a minimum.

In the above example, phases (code patterns) of the orthogonal codes, by which signals to be transmitted from the transmission antenna #1 are multiplied, are controlled. Conversely, phases of orthogonal codes, by which signals to be transmitted from the transmission antenna #0 are multiplied, may be controlled. Alternatively, phases of part of the orthogonal codes of signals to be transmitted from both the transmission antennas #0 and #1 may be controlled.

The peak power controller 12 processes signal sequences to be transmitted from the transmission antennas 21 so as to yield a difference in peak power of each symbol (or plural symbols) between a signal transmitted from the transmission antenna #0 and a signal transmitted from the transmission antenna #1, and outputs the signal sequences to the multiplexers 13-1 and 13-2.

The multiplexers 13-1 and 13-2 each multiplexes (orthogonal-frequency-multiplexes or orthogonal-code-multiplexes) signals having undergone the peak power control to be transmitted from a corresponding transmission antenna #0.

The multiplexed signal is outputted to a corresponding modulator 14-1 or 14-2. Each of the modulators 14-1 and 14-2 modulates the multiplexed signal inputted from a corresponding multiplexer 13-1 or 13-2.

(In the case of orthogonal frequency multiplexing)

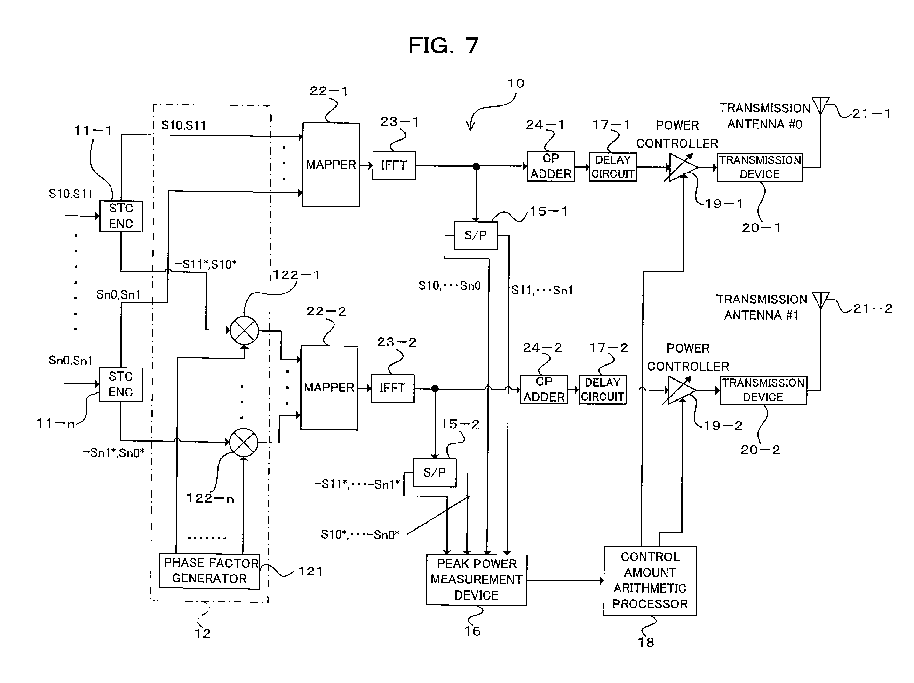

In the case of orthogonal frequency multiplexing, the functions of the multiplexers 13-1 and 13-2 and the modulators 14-1 and 14-2 are accomplished with mappers 22-1 and 22-2 and IFFTs (Inverse Fast Fourier Transformer) 23-1 and 23-2, as illustrated in FIG. 7, for example. In the case of orthogonal frequency multiplexing, CP adders 24-1 and 24-2 can be provided in the front stage of the delay circuits 17-1 and 17-2.

The mapper 22-1 is inputted thereto one of the n sequences of STC symbol sequences in two systems obtained by the STC encoder 11-i to map each inputted symbol sequence onto a predetermined sub-carrier to be transmitted from the transmission antenna #0.

The mapper 22-2 is inputted thereto signals obtained by multiplying the other n sequences of the STC symbol sequences by the above phase factors by the complex multipliers 122-i to map each inputted symbol sequence onto a predetermined sub-carrier to be transmitted from the transmission antenna #1.

Each of the IFFTs 23-1 and 23-2 performs the IFFT process on a transmission signal in the frequency domain inputted from a corresponding mapper 22-1 or 22-2 to convert the signal into a signal in the time domain. The IFFT-processed transmission signals in the time domain are inputted to the CP adders 24-1 and 24-2, while inputted to the S/P converters 15-1 and 15-2.

Each of the CP adders 24-1 and 24-2 adds a cyclic prefix (CP (also called guard interval)) to the transmission signal in the time domain obtained by a corresponding IFFT 23-1 or 23-2 in order to reduce the multi-path interference due to delayed wave. The transmission signal added CP thereto is inputted to a corresponding delay circuit 17-1 or 17-2.

(In the case of orthogonal code multiplexing)

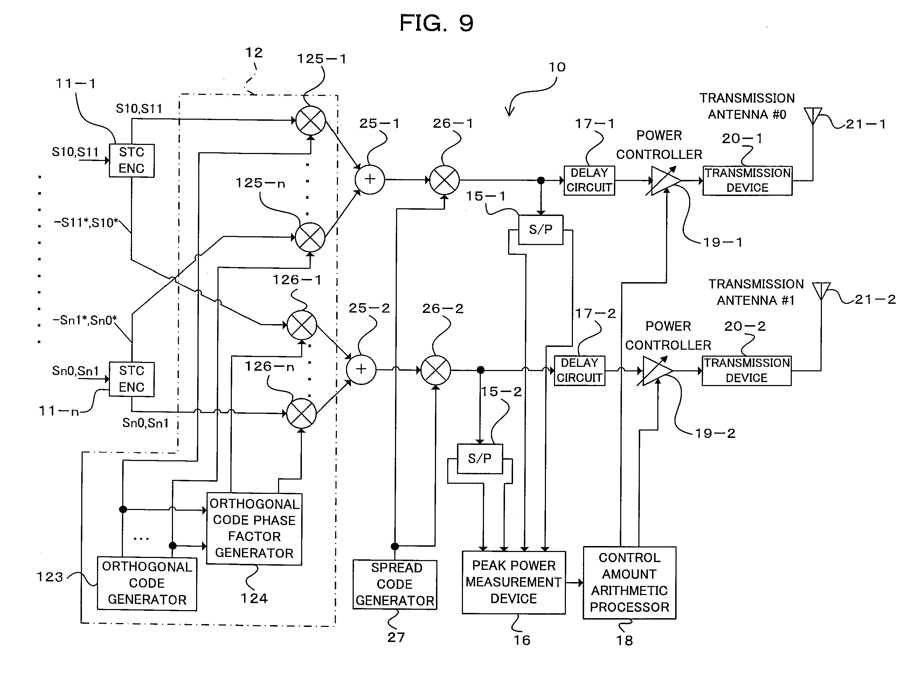

In the case of orthogonal frequency multiplexing, functions of the multiplexers 13-1 and 13-2 and the modulators 14-1 and 14-2 are accomplished as a block including adders 25-1 and 25-2, spread code multipliers 26-1 and 26-2 and a spread code generator 27, as illustrated in FIG. 9, for example.

The adder 25-1 adds outputs of the complex multipliers 125-i illustrated in FIG. 5 to multiplex the outputs. The adder 25-2 adds outputs of the complex multipliers 126-i illustrated in FIG. 5 to multiplex the outputs.

The spread code generator 27 generates predetermined spread codes. Each of the spread code multipliers (spreader) 26-1 and 26-2 multiplies an output of the corresponding adders 25-1 or 25-2 by the spread code to perform the spreading process on the transmission signal. Each of the spread transmission signals is inputted to a corresponding delay circuit 17-1 or 17-2, while inputted to a corresponding S/P converter 15-1 or 15-2.

The S/P converter 15-1 S/P-converts the transmission signal (modulation signal) modulated by the modulator 14-1 to separate the signal into symbols. Similarly, the S/P converter 15-2 S/P-converts the transmission signal (modulation signal) modulated by the modulator 14 to separate the signal into symbols. The signals obtained by the S/P converters 15-1 and 15-2 are inputted to the peak power measurement device 16.

The peak power measurement device 16 measures a peak power of each of the symbols (plural symbols) of the modulation signals inputted from the S/P converters 15-1 and 15-2. A result of the measurement is given to the control amount arithmetic processor 18.

The control amount arithmetic processor 18 determines a transmission power control value to be given to each of the power controller 19-1 and 19-2 through an arithmetic operation on the basis of a measurement value of the peak power of each symbol (or plural symbols) obtained by the peak power measurement device 16. It is preferable that the transmission power control values be determined to be values that make the peak powers of signals transmitted from the transmission antennas #0 and #1 be equal and minimized. Alternatively, the transmission power control values may be values that can make a sum of powers of two symbols transmitted from the transmission antennas #0 and #1 constant.

Each of the power controllers 19-1 and 19-2 is, for example, a variable gain amplifier, which performs a transmission power control on each symbol of the transmission signal (modulation signal) on the basis of a transmission power control value (gain control value) determined by the control amount arithmetic processor 18.

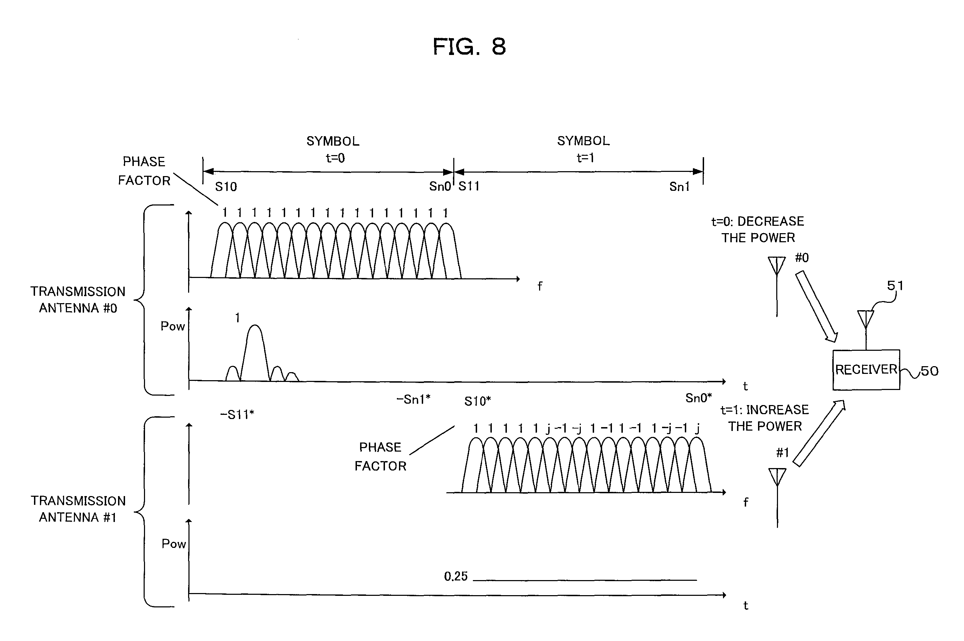

In the case of orthogonal frequency multiplexing, the transmission power from the transmission antenna #0 is decreased at a time t=0 that a symbol $S_0$ is transmitted from the transmission antenna #0, while the transmission power from the transmission antenna #1 is increased (or kept) at a time t=1 that a symbol $S_0^*$ is transmitted from the transmission antenna #1, as illustrated in FIG. 8.

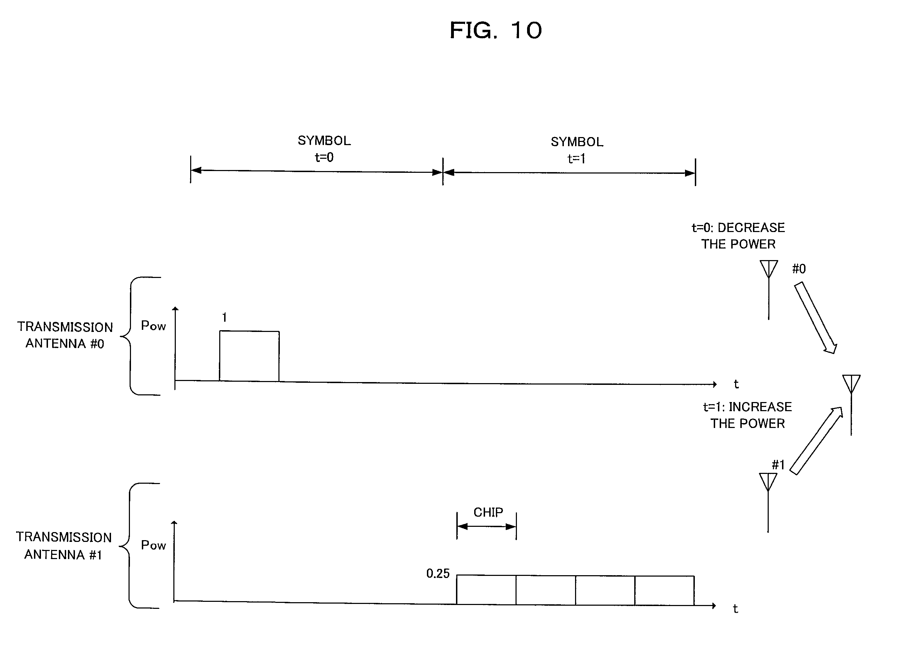

In the case of orthogonal code multiplexing, the transmission power from the transmission antenna #0 is decreased at a time t=0 that a symbol $S_0$ is transmitted from the transmission antenna #0, while the transmission power from the transmission antenna #1 is increased (or kept) at a time that a symbol $S_0^*$ is transmitted from the transmission antenna #1, as illustrated in FIG. 10, for example.

Under such transmission power control, the peak powers from the transmission antennas #0 and #1 can be minimized. Alternatively, the transmission powers from the transmission antennas #0 and #1 can be equal. On such occasion, a sum of transmission powers of the two symbols (or symbol blocks) transmitted from the transmission antennas #0 and #1 can be constant.

Each of the delay circuits 17-1 and 17-2 delays an input signal to the power controller 19-1 or 19-2 according to a time required for the aforementioned peak power measurement and control amount arithmetic operation, whereby the power control can be carried out on the transmission signal (symbol) at an appropriate timing.

The transmission signals having undergone the above transmission power control are applied a predetermined wireless transmission process such as conversion to a wireless frequency (up-conversion) and the like by the transmission devices 20-1 and 20-2, and transmitted to the receiver 50 from the transmission antennas 21-1 and 21-2.

As stated above, the transmitter 10 in this example space-time-codes the transmission stream #i, and performs a process (phase control) on each symbol (or symbol block) to yield a difference in peak power between a symbol sequence transmitted from one of the antennas 21 and a symbol sequence transmitted from the other transmission antenna 21.

Then, the transmitter 10 measures the peak power of each symbol (or symbol block), and controls the transmission power of each symbol (or plural symbols) from the transmission antennas 21 according to a result of the measurement so that the peak power of each of the transmission antennas 21 are minimized.

Therefore, it is possible to reduce the peak power (PAPR) in the transmitter diversity communication without applying the non-linear process such as clipping filter method, and without increasing information to be informed to the receiving side, unlike the frequency domain interleaving method or the PTS method. As a result, it becomes possible to ease the amplification property that the transmission amplifier in each of the transmission devices 20-1 and 20-2, which is an example of the transmission amplifier is required, and to attain efficient use of the transmission amplifier. Further, it becomes possible to decrease the size of the transmission amplifier and power consumption of the same.

(1.2) Receiver

(In the case of orthogonal frequency multiplexing)

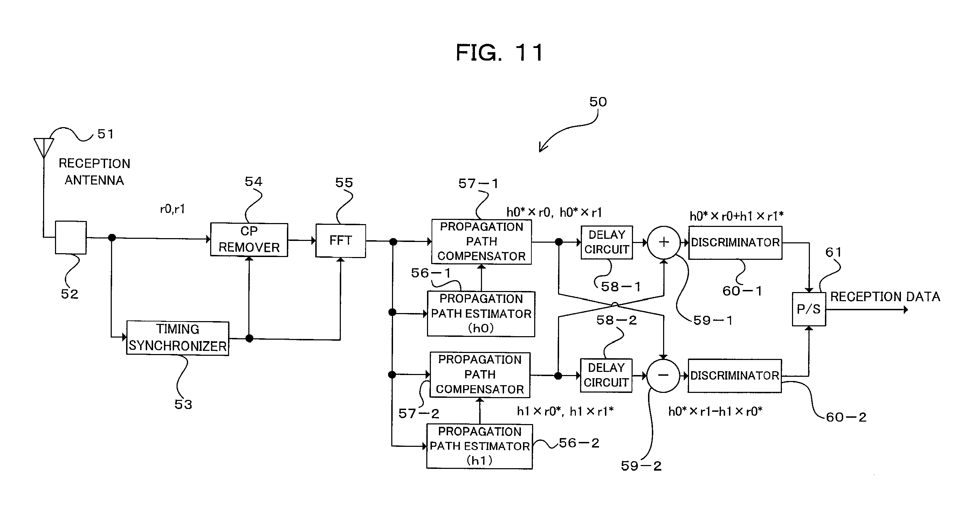

FIG. 11 is a block diagram illustrating an example of configuration of the receiver 50 according to the first embodiment. The configuration of the receiver 50 illustrated in FIG. 11 is in the case of orthogonal frequency multiplexing, having a reception antenna 51, a reception device 52, a timing synchronizer 53, a CP remover 54, and an FFT (Fast Fourier Transformer) 55, for example. Further, the receiver 50 has propagation path estimators 56-1 and 56-2, propagation path compensators 57-1 and 57-2, delay circuits 58-1 and 58-2, an adder 59-1, a subtractor 59-2, discriminators (determination device) 60-1 and 60-2, and a parallel/serial (P/S) converter 61.

A wireless signal received by the reception antenna 51 is subjected to a predetermined wireless reception process such as low-noise amplification, frequency conversion (down-conversion), etc. in the reception device 52 to be converted into a base band signal. The received signal (r0, r1) is expressed by the equation (1) mentioned above, for example.

The received signal converted into the base band signal is inputted to both the timing synchronizer 53 and the CP remover 54. The timing synchronizer 53 detects an OFDM symbol timing of the received signal inputted from the reception device 52 to establish the synchronization. The detected symbol timing is given to both the CP remover 54 and the FFT 55.

The CP remover 54 removes the CP of the received signal on the basis of the above symbol timing. The FFT 55 performs the FFT process on the received signal whose CP has been removed, on the basis of the above symbol timing, to convert the received signal into a signal in the frequency domain. The signal in the frequency domain is inputted to the propagation path estimators 56-1 and 56-2, and the propagation path compensators 57-1 and 57-2.

The propagation path estimators 56-1 and 56-2, the propagation path compensators 57-1 and 57-2, the delay circuits 58-1 and 58-2, the adder 59-1 and the subtractor 59-2 together perform the STC decoding process on the received signal.

The propagation path estimator 56-1 estimates a wireless propagation path (channel) value h0 from the transmission antenna #0 to the reception antenna 51 on the basis of a known received signal (pilot signal) contained in the received signal in the frequency domain and transmitted on a sub-carrier assigned to the transmission antenna #0.

Similarly, the propagation path estimator 56-2 estimates a wireless propagation path (channel) value h1 from the transmission antenna #1 to the reception antenna 51 on the basis of known signal (pilot signal) contained in the received signal in the frequency domain and transmitted on a sub-carried assigned to the transmission antenna #1.

Each of the propagation path compensators 57-1 and 57-2 gives propagation path compensation to the received signal on the basis of the channel estimation value h0 or h1 estimated by the corresponding propagation path estimator 56-1 or 56-2. When the peak power controller 12 in the transmitter 10 has the configuration illustrated in FIG. 3, the propagation path compensator 57-1 complex-multiplies the received signal (r0, r1) by a channel estimation value h0 by means of a complex multiplier 571-1, thereby to compensate distortion (phase, amplitude) that the received signal has been subjected along the wireless propagation path from the transmission antenna #0 to the reception antenna 51. Whereby, signal components transmitted from the transmission antenna #0 are detected (separated). The reception signals (symbols) for two symbol times can be expressed as h0*×r0 and h0*×r1.

On the other hand, the propagation path compensator 57-2 has a complex multiplier 572-1, a sub-carrier phase setter 572-2 and a complex multiplier 572-3. The sub-carrier setter 572-2 has the same phase factor setting for each sub-carrier as the phase factor generator 121 in the transmitter 10.

Accordingly, the complex multiplier (phase corrector) 572-3 complex-multiplies the channel estimation value h1 obtained by the propagation path estimator 56-2 by a phase factor exp(jθi) given from the sub-carrier phase setter 572-2. Whereby, the phase control according to the peak power control (phase control) in the transmitter 10 is performed on the channel estimation value h1 to correct the channel estimation value h1 according to the phase control performed in the transmitter 10.

The complex multiplier 572-1 complex-multiplies the reception signal (r0, r1) by the corrected channel estimation value h1 to compensate the distortion (phase, amplitude) that the reception signal has been subjected along the wireless propagation path from the transmission antenna #1 to the reception antenna 51. Whereby, signal components transmitted from the transmission antenna #1 are detected (separated). The reception signals (symbols) for two symbol time can be expressed as h1×r0* and h1×r1*.

The reception signal having undergone the propagation-path-compensation in the propagation path compensator 57-1 is delayed by one symbol time in the delay circuit and inputted to the adder 59-1, while inputted to the subtractor 59-2 without a delay.

On the other hand, the reception signal having undergone the propagation-path-compensation in the propagation path compensator 57-2 is delayed by one symbol time in the delay circuit 58-2 and inputted to the subtractor 59-2, while inputted to the adder 59-1 without a delay.

The adder 59-1 adds the reception signal obtained by the propagation path compensator 57-2 to the reception signal of one symbol time before obtained by the propagation path compensator 57-1. On the other hand, the subtractor 59-2 subtracts the reception signal of one symbol time before obtained by the propagation path compensator 57-2 from the reception signal obtained by the propagation path compensator 57-1.

As a result of the above operation, a signal expressed as h0*×r0+h1×r1* is obtained at the output of the adder 59-1, while a signal expressed as h0*×r1-h1×r0* is obtained at the output of the subtractor 59-2. The former signal has signal components corresponding to one of the signal sequences of the STC code, while the latter signal has signal components corresponding to the other signal sequence of the STC code.

These signals are discriminated (reception-data-determined) by the discriminators 60-1 and 60-2, converted into serial signals by the P/S converter 61, and outputted as reception data. On this occasion, a signal containing the signal components in the signal sequences of the transmission STC code, hence transmitter diversity gain can be obtained.

In short, a block including the adder 59-1, the subtractor 59-2, the discriminators 60-1 and 60-2 and the P/S converter 61 is used as an example of a decoder which performs addition and subtraction on the reception signal sequences having undergone the propagation path compensation to decode the reception signal sequences. This point is the same in the following description unless specifically mentioned.

(In the case of orthogonal code multiplexing)

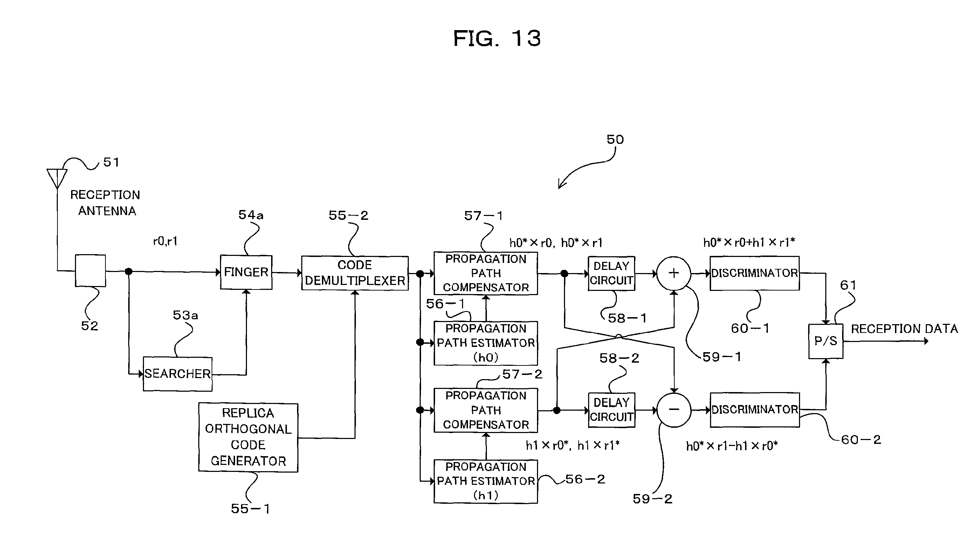

FIG. 13 is block diagram illustrating an example of configuration of a receiver 50 according to the first embodiment, in the case of orthogonal code multiplexing. The receiver 50 illustrated in FIG. 13 has, for example, a reception antenna 51, reception device 52, a searcher 53a, a finger 54a, a replica orthogonal code generator 55-1 and a code demultiplexer 55-2. Further, the receiver 50 has propagation path estimators 56-1 and 56-2, propagation path compensators 57-1 and 57-2, delay circuits 58-1 and 58-2, an adder 59-1, a subtractor 59-2, discriminators (determination device) 60-1 and 60-2 and a parallel/serial (P/S) converter 61.

A wireless signal received by the reception antenna undergoes a predetermined wireless reception process such as low-noise amplification, frequency conversion (down-conversion), etc. in the reception device 52 to be converted into a base band signal. The reception signal (r0, r1) is expressed by the equation (1) mentioned hereinbefore.

The reception signal converted into the base band signal is inputted to both the searcher 53a and the finger 54a.

The searcher 53a measures a delay profile of the reception signal to detect a timing (symbol timing of CDMA symbol) at which the correlation power is large. The detected timing signal is used as a despreading timing in the finger 54a. A matched filter or the like can be used for detection of the correlation power.

The finger 54a despreads the reception signal on the basis of the timing signal detected by the searcher 53a.

The replica orthogonal code generator 55-1 generates a replica of an orthogonal code used in the transmitter 10.

The code demultiplexer 55-2 demutliplexes the signal despread by the finger 54a into reception signals of orthogonal codes. The despread reception signals of the respective orthogonal codes are inputted to the propagation path estimators 56-1 and 56-2 and the propagation path compensators 57-1 and 57-2.

The propagation path estimators 56-1 and 56-2 estimate channel values h0 and h1 of wireless propagation paths between the transmission antennas #0 and #1, and the reception antenna 51 from the reception signals demultiplexed into the orthogonal codes, with the use of pilot signals of the orthogonal codes assigned to the respect transmission antennas #0 and #1 in the transmitter 10.

The propagation path compensators 57-1 and 57-2, the delay circuits 58-1 and 58-2, the adder 59-1 and the subtractor 59-2 together perform the STC decoding process on the reception signals.

In other words, the propagation paths compensators 57-1 and 57-2 perform propagation path compensation on the reception signals, on the basis of the channel estimation values h0 and h1 estimated by the respective propagation path estimators 56-1 and 56-2.

In the case where the peak power controller 12 in the transmitter 10 has the configuration illustrated in FIG. 5, for example, the propagation path compensator 57-1 complex-multiplies the reception signal (r0, r1) by the channel estimation value h0 by means of a complex multiplier 571-1 to compensate distortion (phase, amplitude) that the reception signal has been subjected along the wireless propagation path from the transmission antenna #0 to the reception antenna #0. Whereby, signal components transmitted from the transmission antenna #0 are detected (separated). The reception signals (symbols) for two symbol times can be expressed as $h0^* \times r0$ and $h0^* \times r1$.

On the other hand, the propagation path compensator 57-2 has a complex multiplier 572-1, a complex multiplier 572-3 and a code phase setter 572-4. The code phase setter 572-4 is set the same phase factor setting for each orthogonal code as the orthogonal code phase factor generator 124 in the transmitter 10.

The complex multiplier (phase corrector) 572-3 complex-multiplies the channel estimation value h1 obtained by the propagation path estimator 56-2 by a phase factor given from the code phase setter 572-4. Whereby, the phase control according to the peak power control (phase control) in the transmitter 10 is performed on the channel estimation value h1 to correct the channel estimation value h1 according to the phase control performed in the transmitter 10.

The complex multiplier 572-1 complex-multiplies the reception signal (r0, r1) by the corrected channel estimation value h1 to compensate distortion (phase, amplitude) that the received signal has been subjected along the propagation path. Whereby, signal components transmitted from the transmission antenna #1 are detected (separated). The reception signals (symbols) for two symbol times can be expressed as $h1 \times r0^*$ and $h1 \times r1^*$.

The reception signal having undergone the propagation path compensation in the propagation path compensator 57-1 is delayed by one symbol time in the delay circuit 58-1 and inputted to the adder 59-1, while inputted to the subtractor 59-2 without a delay.

On the other hand, the reception signal having undergone the propagation path compensation in the propagation path compensator 57-2 is delayed by one symbol time in the delay circuit 58-2 and inputted to the subtractor 59-2, while inputted to the adder 59-1 without a delay.

The adder 59-1 adds the reception signal obtained by the propagation path compensator 57-2 to the reception signal of one symbol time before obtained by the propagation path compensator 57-1. On the other hand, the subtractor 59-2 subtracts the reception signal of one symbol time before obtained by the propagation path compensator 57-2 from the reception signal obtained by the propagation path compensator 57-1.

As a result, a signal expressed as $h0^* \times r0 + h1 \times r1^*$ is obtained at the output of the adder 59-1, while a signal expressed as $h0^* \times r0 - h1 \times r0^*$ is obtained at the output of the subtractor 59-2. The former signal has signal components corresponding to one of the signal sequences of the STC code, while the latter signal has signal components corresponding to the other signal sequence of the STC code.

These signals are discriminated by the discriminators 60-1 and 60-2 (reception data determination), converted into serial signals by the P/S converter 61, and outputted as reception data. On this occasion, a signal containing the signal components in the signal sequences of the transmission STC code is composed, hence the transmitter diversity gain can be obtained.

[2] Second Embodiment

When the transmission power of each of the transmission antennas #0 and #1 is independently controlled in the transmitter 10, there is a fear that the orthogonal relationship (orthogonality) between a symbol transmitted from the transmission antenna #0 and a symbol transmitted from the transmission antenna #1 is distorted. In this example, described is a transmission power control which can prevent degradation of such orthogonality.

When a power control value (control amount) of a symbol having a symbol number y transmitted from the transmission antenna #m (m = 0, 1) is expressed as kym in common to transmission streams #1 to #n, the reception signals r0 and r1 at the receiver 50 can be expressed by the equation (3) and (4) below:

[Equation 2]

$$r0 = h\,0 \cdot k00 \cdot S_0 - h1 \cdot k11 \cdot S_1^* \cdot e^{(j\theta)} \quad ...(3)$$

$$r1 = h0 \cdot k10 \cdot S_1 + h1 \cdot k01 \cdot S_0^* \cdot e^{(j\theta)} \quad ...(4)$$

These equations (3) and (4) can be changed into equations (5) and (6) below:

[Equation 3]

$$h0^* \cdot k00 \cdot r0 = |h0|^2 \cdot k00^2 \cdot S_0 - h0^* \cdot h1 \cdot k00 \cdot k11 \cdot S_1^* \cdot e^{(j\theta)} \quad ...(5)$$

$$h1 \cdot k01 \cdot r1^* \cdot e^{(j\theta)} = h0^* \cdot h1 \cdot k01 \cdot k10 \cdot S_1^* \cdot e^{(j\theta)} + |h1|^2 \cdot k01^2 \cdot S_0 \quad ...(6)$$

When an equation (7) below is satisfied, equations (8) and (9) are established, hence it is found that degradation of the orthogonality is not generated.

[Equation 4]

$$k00 \cdot k11 = k01 \cdot k10 \quad ...(7)$$

$$\overline{S_0} = \left( |h0|^2 \cdot k00^2 + |h1|^2 \cdot k01^2 \right) S_0 \quad ...(8)$$

$$\overline{S_1} = \left( |h0|^2 \cdot k10^2 + |h1|^2 \cdot k11^2 \right) S_1 \quad ...(9)$$

In this example, the control amount arithmetic processor 18 determines the power control values to be given to the power controllers 19-1 and 19-2 so as to satisfy the relationship of k00 · k11=k01 · k10. The determined power control values can be notified to the receiver 50. The receiver 50 having received this notification can carry out appropriate demodulation and decoding including correction of the channel estimation values, for example, on the basis of the notified power control values. This notification can be also done by changing a pattern of the pilot signal periodically transmitted to the receiver 50, or can be done with the use of a predetermined channel such as the control channel.

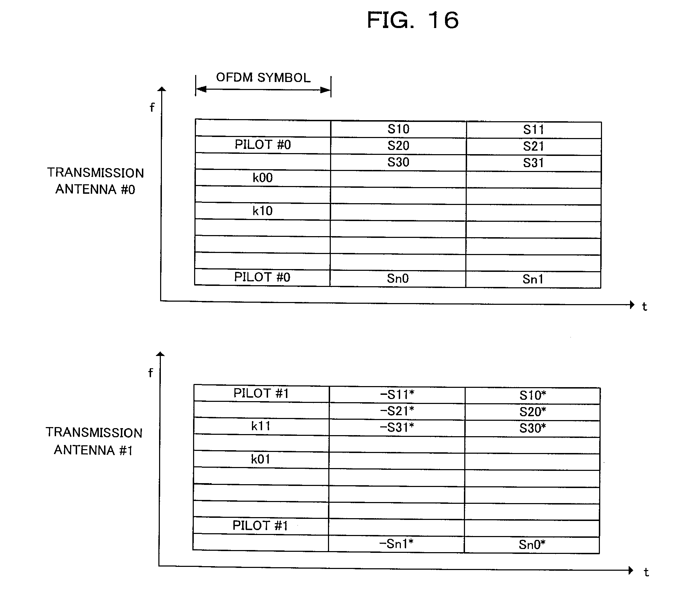

FIG. 16 illustrates an example of manner of this notification. FIG. 16 illustrates a state where pilot signals #0 and #1 of the transmission antennas #0 and #1 and the power control values are inserted in OFDM symbols of separate sub-carriers in OFDM frames.

(Transmitter configuration)

For this purpose, the transmitter 10 in this example has a pilot/power control value inserter 27-1 (27-2) between the delay circuit 17-1 (17-2) and the power controller 19-1 (19-2), which inserts the pilot signal #0 or #1 and the power control values into a predetermined OFDM symbol (sub-carrier) in an OFDM frame as illustrated in FIG. 16, for example.

The pilot/power control value inserters 27-1 and 27-2 are used as an example of transmission power control amount notifier which notifies the receiver 50 of power control values of the transmission powers satisfying predetermined conditions under which the aforementioned orthogonal relationship is kept.

Incidentally, a rule about how the pilot signal #0 or #1 and the power control values are inserted into an OFDM frame is known between the transmitter 10 and the receiver 50.

(Receiver configuration)

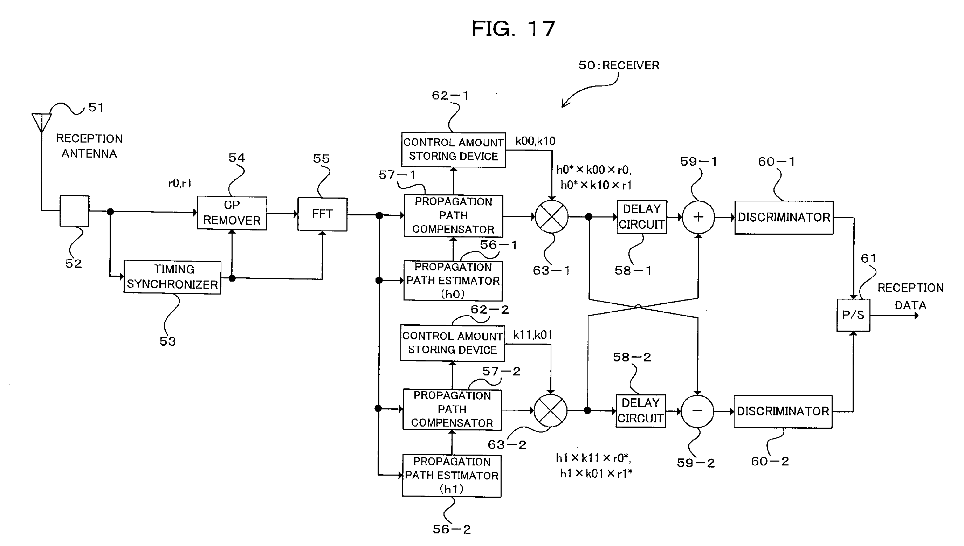

On the other hand, as illustrated in FIG. 17, the receiver 50 performs propagation path compensation (demodulation) on the reception signals with the use of the channel estimation values h0 and h1 by means of the propagation path compensators 57-1 and 57-2 as described hereinbefore. When the receiver 50 demodulates a symbol (sub-carrier) in which the power control values have been inserted, the receiver 50 stores the power control values h0 and h1 in control amount storing devices 62-1 and 62-2.

For example, power control values k00 and k10 for the symbol $S_0$ and $S_1$ are stored in the control amount storing devices 62-1, while power control values k11 and k01 for the symbols $S_1^*$ and $S_0^*$ are stored in the control amount storing device 62-2.

Symbols (sub-carriers) in which data has been mapped are decoded with the use of power control values stored in the control amount storing devices 62-1 and 62-2.

For example, a reception signal (r0, r1) demodulated by the propagation path compensator 57-1 is multiplied by the power control amounts k00 and k10 by the complex multiplier 63-1. A signal obtained as a result of the multiplication can be expressed as h0*×k00×r0, h0*×k10×r1.

On the other hand, a reception signal (r0, r1) demodulated by the propagation path compensator 57-2 is multiplied by power control values k11 and k01 by the complex multiplier 63-2. A signal obtained as a result of the multiplication can be expressed as h1×k11×r0*, h1×k01×r1*.

Namely, the complex multipliers 63-1 and 63-2 are an example of power corrector which corrects a power of each signal sequence demultiplexed through the propagation path compensation, according to a power control amount determined when the transmission power for each transmission antenna 21 is controlled in the transmitter 10 so as to keep the orthogonal relationship.

The reception signal obtained by the complex multiplier 63-1 is delayed by one symbol time in the delay circuit 58-1 and inputted to the adder 59-1, while inputted to the subtractor without a delay.

On the other hand, the reception signal obtained by the complex multiplier 63-2 is delayed by one symbol time in the delay circuit 58-2 and inputted to the subtractor 59-2, while inputted to the adder 59-1 without a delay.

The adder 59-1 adds the reception signal obtained by the complex multiplier 63-2 to the reception signal of one symbol time before obtained by the complex multiplier 63-1. On the other hand, the subtactor 59-2 subtracts the reception signal of one symbol time before obtained by the complex multiplier 63-2 from the reception signal obtained by the complex multiplier 63-1.

As a result of the above operation, a signal expressed as h0*×k00×r0+h1×k11×r0* is obtained at the output of the adder 59-1, while a signal expressed as h0*×k10×r1-h1×k01×r1* is obtained at the output of the subtractor 59-2.

The former signal has signal components corresponding to one of the signal sequences of the STC code, while the latter signal has signal components corresponding to the other signal sequence of the STC code. The components of the both signals are signal components having undergone the transmission power control for each transmission antennas #0 and #1 so as to keep the orthogonal relationship between the signals.

These signals are discriminated by the discriminators 60-1 and 60-2 (reception data determination), converted into a serial signal by the P/S converter 61, and outputted as reception data. On this occasion, a signal containing signal components of the signal sequences of the transmission STC code is composed with the orthogonal relationship kept, hence excellent transmitter diversity gain can be obtained.

Meanwhile, the transmitter 10 may interpolate the pilot signals into each OFDM symbol (any one of the sub-carriers) at a timing that the data symbols $S_0$, $S_1$, $-S_1^*$, $S_0^*$ are transmitted.

On such occasion, so long as the transmission powers of the pilot signal is controlled as well as the above data symbols, the receiver 50 can obtain information about h0*×k00, h1×k11, h0*×k10, h1×k01, on the basis of the reception pilot signals.

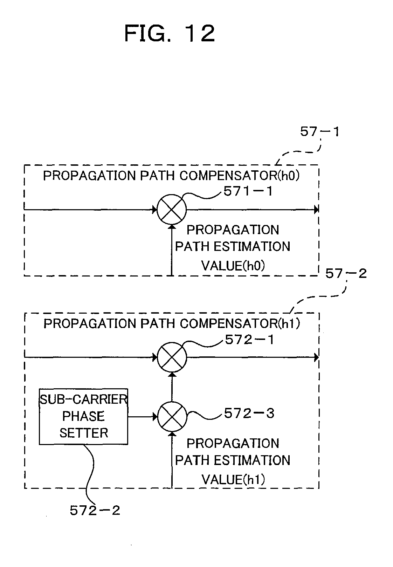

Therefore, even when the transmitter 10 does not notify the receiver of each power control value as above, the receiver 50 can appropriately demodulate and decode the reception signal with the above configuration illustrated in FIGS. 11 and 12, for example.

[3] Third Embodiment

When the power control values are computed in the transmitter 10 so as not to degrade the orthogonality of symbols transmitted from the transmission antennas #0 and #1, there is a fear that the degree of improvement of the PAPR is degraded depending on the magnitude relationship between the peak powers of the transmission symbols. For this reason, this embodiment aims to decrease the PAPR while keeping the orthogonality.

The orthogonality can be prevented from being degraded when the power control values satisfy the conditions [k00 · k11 = k01 · k10 (therefore, k00/k01=k10/k11)] expressed by the aforementioned equation (7).

When above conditions are not satisfied, the transmitter 10 exchanges transmission symbols so as to satisfy the conditions, thereby to decrease the PAPR.

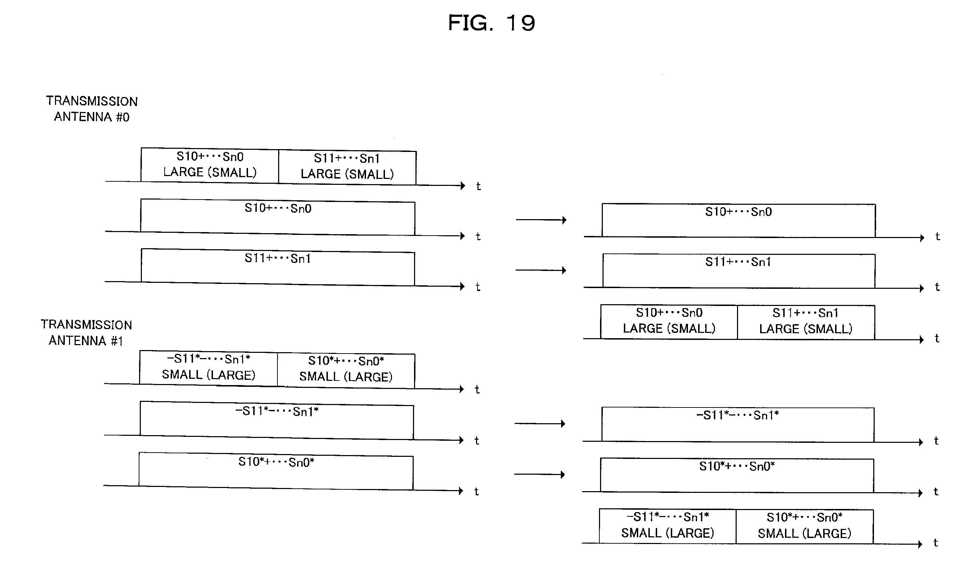

FIG. 19 illustrates an example where the transmission symbol exchanging process is unnecessary. FIG. 19 illustrates a case where peak powers of symbols $S_0$ and $S_1$ to be transmitted from the transmission antenna #0 are in a relationship of "large (small) "and "large (small)", and peak powers of symbols $-S_1^*$ and $S_0^*$ are in a relationship of "small (large)" and "small (large)". Since this case can satisfy the conditional equation (7) of the orthogonality, the control amount arithmetic processor 18 determines power control values k00, k01, k10 and k11 that satisfy the equation (7) and yield the minimum peak powers.

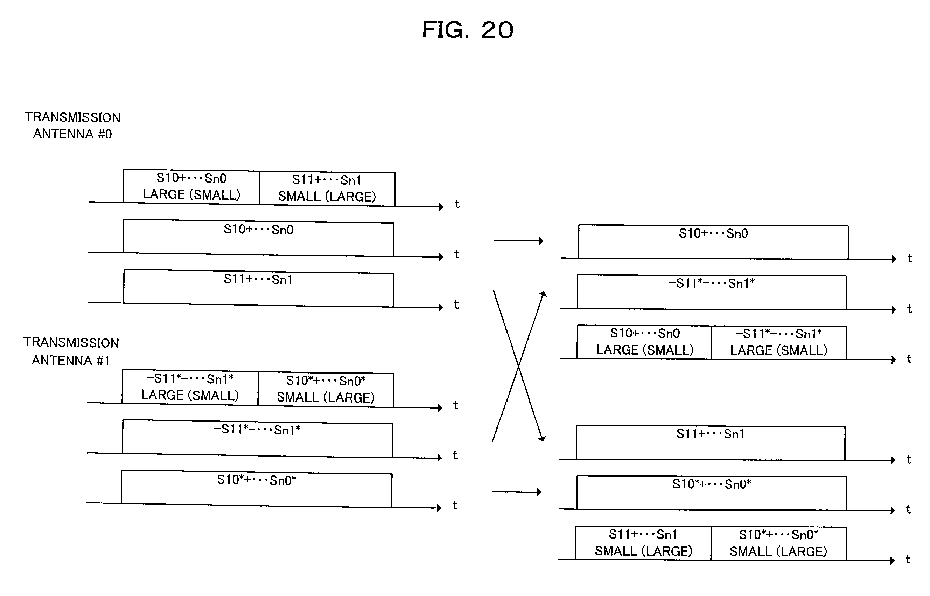

FIG. 20 illustrates an example where the transmission symbol exchanging process is performed. FIG. 20 illustrates a case where peak powers of symbols $S_0$ and $S_1$ transmitted from the transmission antenna #0 are in a relationship of "large (small)" and "small (large)", whereas peak powers of symbols $-S_1^*$ and $S_0^*$ transmitted from the transmission antenna #1 are in a relationship of "large (small)" and "small (large)". In this case, the conditional equation (7) of the orthogonality can not be satisfied.

To cope with this, the transmitter 10 performs the process of exchanging the transmission symbols between the transmission antennas #0 and #1, and determines power control values k00, k01, k10 and k11 that satisfy the conditional equation (7) and yield the minimum peak powers. In the example illustrated in FIG. 20, the symbol $S_1$ transmitted from the transmission antenna #0 and the symbol $-S_1^*$ transmitted from the transmission antenna #1 are exchanged for each other.

When the above symbol exchanging process is performed, the transmitter 10 can notify the receiver 50 of this. This notification can be done by changing the pattern of the pilot signal periodically transmitted to the receiver 50, or by using a signal in a predetermined channel such as the control channel.

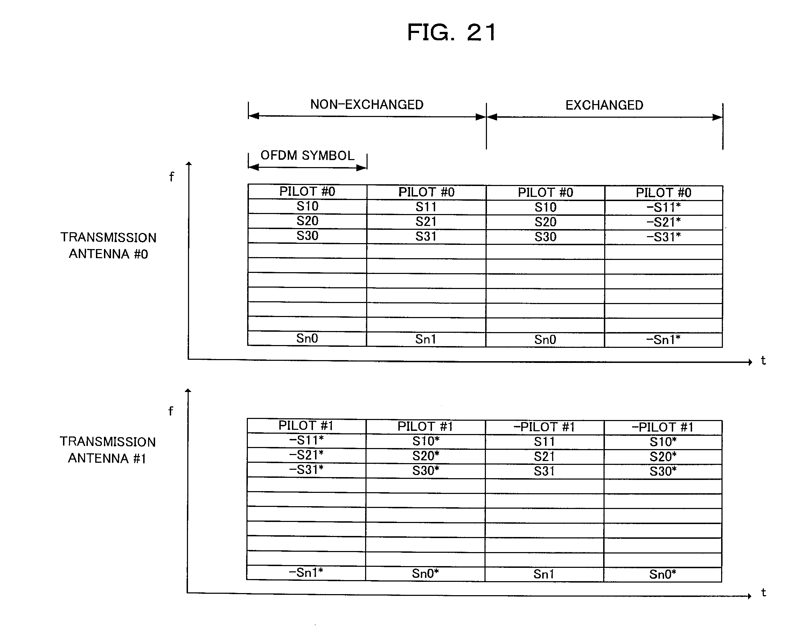

FIG. 21 illustrates an example of the notification method when the pilot signal is used. In FIG. 21, the symbol exchanging process is not performed on the first and second OFDM symbols, whereas the symbol exchanging process is performed on the third and fourth OFDM symbols.

The transmitter 10 inserts the pilot signals #0 and #1 for the transmission antennas #0 and #1 at a transmission timing of each OFDM symbol. On this occasion, the transmitter 10 changes the pattern of the pilot signal #0 or #1 in an OFDM symbol having undergone the symbol exchanging process. For example, the transmitter 10 reverses the polarity (pilot pattern) of the pilot signal.

Whereby, the receiver 50 detects whether the symbol exchanging process has been performed or not by monitoring the pattern (polarity, for example) of the received pilot signals #0 and #1, thereby to carry out an appropriate receiving process.

(Transmitter configuration)

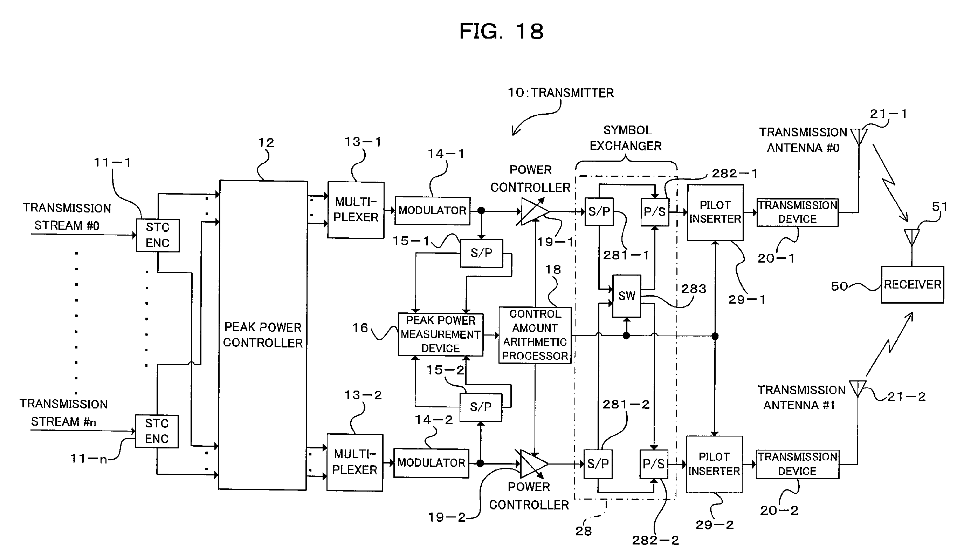

FIG. 18 illustrates an example of configuration of a transmitter 10 accomplishing the above process. The transmitter 10 illustrated in, for example, FIG. 18 has a symbol exchanger 28 and a pilot inserter 29-1 (29-2) between the power controller 19-1 (19-2) and the transmission device 20-1 (20-2).

The symbol exchanger 28 selectively performs a symbol exchanging process on output signals fed from the power controllers 19-1 and 19-2. Whether the symbol exchanging process is necessary or not can be determined by the control amount arithmetic processor 18 on the basis of a result of the measurement by the peak power measurement device 16, for example.

The symbol exchanger 28 has an S/P converter 281-1 and a P/S converter 282-1 corresponding to the transmission antenna #0, an S/P converter 281-2 and a P/S converter 282-2 corresponding to the transmission antenna #1, and a switch (SW) 283.

The S/P converter 281-1 (281-2) S/P-converts an output signal from the transmission power controller 19-1 (19-2), and outputs one of transmission symbols $S_0$ and $S_1$ (for example, $S_0$) to the P/S converter 282-1 (282-2), while outputting the other transmission symbol (for example, $S_1$) to the switch 283.

The switch 283 outputs a symbol inputted from the S/P converter 281-1 (281-2) corresponding to one #0 (#1) of the transmission antennas #0 and #1 to the P/S converter 282-2 (282-1) corresponding to the other transmission antenna #1 (#0) or to the P/S converter 282-1 (282-2) corresponding to the former transmission antenna #0, according to a result of the determination as to whether the symbol exchanging process is necessary or not fed from the control amount arithmetic processor 18.

The P/S converter 282-1 P/S-converts an input signal (for example, $S_0$) from the S/P converter 281-1 and an input signal ($S_1$ when the symbol exchanging is not performed, or $-S_1{}^*$ when the symbol exchanging is performed) from the switch 283.

Similarly, the P/S converter 282-2 P/S-converts an input signal (for example, $S_0{}^*$) from the S/P converter 281-2 and an input signal ($-S_1{}^*$ when the symbol exchanging is not performed, or $S_1$ when the symbol exchanging is performed) from the switch 283.

As above, the symbol exchanging process of exchanging the transmission symbols between the transmission antennas #0 and #1 is possible.

Each of the pilot inserters (signal exchange information notifiers) 29-1 and 29-2 inserts a pilot signal for the corresponding antenna #0 or #1 which is in a pattern (polarity) according to whether the symbol exchanging process has been performed or not, as illustrated in FIG. 21, for example. The polarity of the pilot signal to be inserted is controlled on the basis of a result of the arithmetic operation by the control amount arithmetic processor 18, for example. Whether the symbol exchanging process has been performed or not can be notified to the receiver 50.

The symbol exchanging process on transmission symbols performed according to a relationship of peak powers of the transmission symbols between the transmission antennas #0 and #1 as above can improve the PAPR while preventing degradation of the orthogonality.

Notification of the power control values k00, k01, k10 and k11 from the transmitter 10 to the receiver 50 can be accomplished in the similar manner to the second embodiment.

(Receiver configuration)

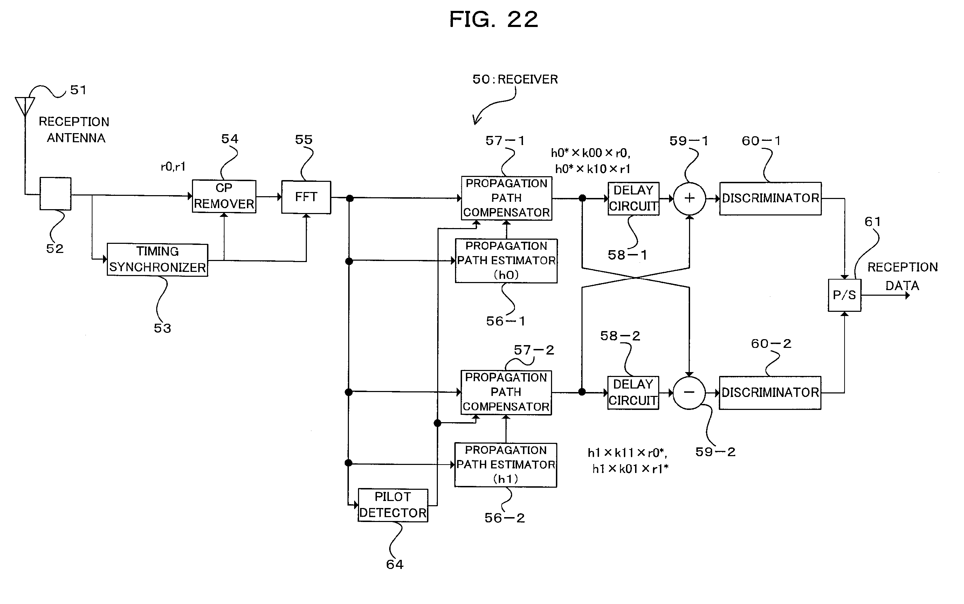

The receiver 50 has a configuration as illustrated in FIG. 22, for example. The receiver 50 illustrated in FIG. 22 has a pilot detector 64 which detects a pilot signal from a reception signal having undergone the FFT process by the FFT 55. Whether the symbol exchanging process has been performed or not (the symbol exchanging process done or not done) in the transmitter 10 can be detected from the pattern (polarity) of a pilot signal from each of the transmission antennas #0 and #1 detected by the pilot detector 64.

According to a result of the detection, the arithmetic process in the propagation path compensators 57-1 and 57-2 are controlled. Table 1 below illustrates an example of the control.

[Table 1]

| Example of propagation path compensation control (switching) | | |
|---|---|---|
| | symbols not exchanged | symbols exchanged |
| propagation path compensator 57-1(h0) | h0*×r0,h0*×r1 | h0*×r0,h0×r1* |
| propagation path compensator 57-2(h1) | h1×r0*,h1×r1* | h1*×r0,h1×r1* |

As illustrated in Table 1, when the symbol exchanging process has not been performed, the propagation path compensator 57-1 performs an arithmetic operation expressed by h0*×r0, h0*×r1 with the use of the reception signal r0 and r1, and the channel estimation value h0 obtained by the propagation path estimator 56-1 to perform propagation path compensation.

Similarly, the propagation path compensator 57-2 performs an arithmetic operation expressed by h1×r0*, h1×r1* with the use of the reception signal r0 and r1, and the channel estimation value h1 obtained by the propagation path estimator 56-2 to perform propagation path compensation.

To the contrary, when the symbol exchanging process has been performed, the propagation path compensator 57-1 performs an arithmetic operation expressed by h0*×r0, h0×r1* with the use of the reception signal r0 and r1, and the channel estimation value h0 obtained by the propagation path estimator 56-1 to perform propagation path compensation.

Similarly, the propagation path compensator 57-2 performs an arithmetic operation expressed by h1*×r0, h1×r1* with the use of the reception signal r0 and r1, and the channel estimation value h1 obtained by the propagation path estimator 56-2 to perform propagation path compensation.

As above, when the symbol exchanging process has been performed in the transmitter 10, the propagation path compensators 57-1 and 57-2 restore the reception symbols to symbols before having undergone the symbol exchanging process, then perform the arithmetic operation corresponding to the propagation path compensation. In other words, the propagation path compensators 57-1 and 57-2 perform a control to exchange the reception signals that are to undergo propagation path compensation, according to whether or not the symbol exchanging process has been performed in the transmitter 10.

The reception signal having undergone the propagation path compensation in the propagation path compensator 57-1 is delayed by one symbol time in the delay circuit 58-1 and inputted to the adder 59-1, while inputted to the subtractor 59-2 without a delay.

On the other hand, the reception signal having undergone the propagation path compensation in the propagation path compensator 57-2 is delayed by one symbol time in the delay circuit 58-2 and inputted to the subtractor 59-2, while inputted to the adder 59-1 without a delay.

The adder 59-1 adds the reception signal obtained by the propagation path compensator 57-2 to the reception signal of one symbol time before obtained by the propagation path compensator 57-1. The subtractor 59-2 subtracts the reception signal of one symbol time before obtained by the propagation path compensator 57-2 from the reception signal obtained by the propagation path compensator 57-1.

The output signal from the adder 59-1 has signal components corresponding to one of the signal sequences of the STC code, while the output signal from the subtractor 59-2 has signal components corresponding to the other signal sequence of the STC code. The components of the both signals are signal components having undergone the transmission power control for the respective transmission antennas #0 and #1 so as to keep a relationship of the orthogonality between the signals. Note that the arithmetic operation of the power control values k00, k01, k10 and k11 is omitted in FIG. 22 (can be the same as the second embodiment).

These signals are discriminated (reception signal determination) by the discriminators 60-1 and 60-2, converted into a serial signal by the P/S converter 61, and outputted as reception data. On this occasion, the signals containing signal components in the signal sequences of the transmission STC code are composed with the orthogonality being kept, hence excellent transmitter diversity gain can be obtained.

[4] Fourth Embodiment

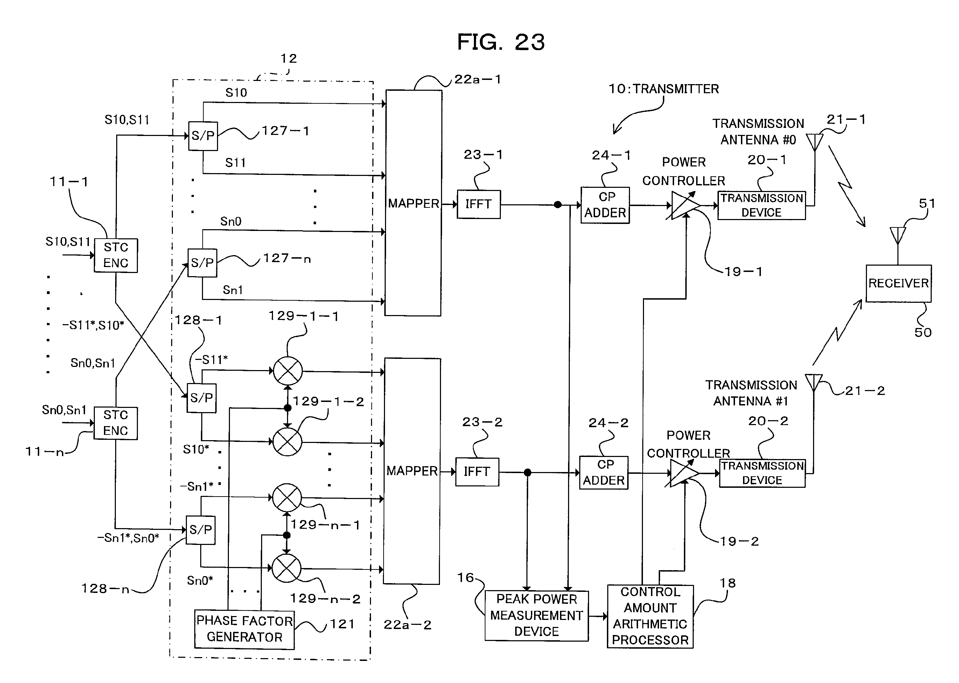

FIG. 23 is a block diagram illustrating an example of configuration of a wireless communication system according to a fourth embodiment. FIG. 23 illustrates a configuration in the case where the aforementioned peak power control is applied to an OFDM transmitter of Space Frequency Block Code (SFBC).

(Transmitter configuration)

The transmitter 10 in this example has a phase factor generator 121, n S/P converters 127-1 to 127-n, n S/P converters 128-1 to 128-n, n complex multipliers 129-1-1 to 129-n-1 and n complex multipliers 129-1-2 to 129-n-2, as an example of the peak power controller 12. Further, the transmitter 10 in this example has mappers 22a-1 and 22a-2 corresponding to the respective transmission antennas #0 and #1. Note that like reference characters in FIG. 23 designate like or corresponding parts described hereinbefore unless specifically mentioned.

In the peak power controller 12 in this example, the S/P converter 127-i is inputted thereto one ($S_0$, $S_1$, for example) of two transmission symbol sequences ($S_0$, $S_1$ and $-S_1^*$, $S_0^*$) obtained by a corresponding one of the STC encoders 11-1 to 11-n to convert the symbol sequence $S_0$, $S_1$ into parallel signals.

The S/P converter 128-i is inputted thereto the other (for example, $-S_1^*$, $S_0^*$) of the two transmission symbol sequences ($S_0$, $S_1$ and $-S_1^*$, $S_0^*$) obtained by a corresponding one of the STC encoders 11-1 to 11-n to convert the transmission symbol sequence into parallel signals $-S_1^*$, $S_0^*$.

The complex multiplier 129-i-1 multiples one (for example, $-S_1^*$) of the two symbols $-S_1^*$, $S_0^*$ obtained by the S/P converter 128-i by a phase factor corresponding to a sub-carrier on which this symbol $-S_1^*$ is to be mapped by the mapper 22a-2 among phase factors for respective sub-carriers of the transmission antenna #1 generated by the phase factor generator 121.

The complex multiplier 129-i-2 multiplies the other (for example, $S_0^*$) of the two symbols $-S_1^*$, $S_0^*$ by a phase factor corresponding to a sub-carrier on which this symbol $S_0^*$ is to be mapped among the phase factors of the above sub-carriers. This phase factor is the same as the phase factor given to the complex multiplier 129-i-1. Namely, each combination ($-S_1^*$, $S_0^*$) in the STC coding is complex-multiplied by the phase factor. Incidentally, the symbol $S_0^*$ is mapped on a sub-carrier (for example, an adjacent sub-carrier) differing from a sub-carrier on which the symbol $-S_1^*$ is mapped.

The mapper 22a-1 maps the two symbols $S_0$, $S_1$ obtained by the S/P converter 127-i on sub-carriers among sub-carriers assigned to the transmission antenna #0, and outputs a result of the mapping to the IFFT 23-1. For example, a symbol sequence $S_0$ is mapped on an odd (or even) sub-carrier, while the symbol sequence $S_1$ is mapped on an even (or odd) sub-carrier adjacent to the sub-carrier on which the symbol sequence $S_0$ is mapped.

The mapper 22a-2 maps the two symbols $-S_1^*$, $S_0^*$ which have been complex-multiplied by a phase factor by the complex multipliers 129-i-1 and 129-i-2 on sub-carriers among sub-carriers assigned to the other transmission antenna #1, and outputs a result of the mapping to the IFFT 23-2. For example, a symbol sequence $-S_1^*$ is mapped on an odd (or even) sub-carrier, while the symbol sequence $S_0^*$ is mapped on an even (or odd) sub-carrier adjacent to the sub-carrier on which the symbol sequence $S_0$ is mapped.

Transmission signals mapped on the sub-carriers for the transmission antennas #0 and #1 as above undergo the IFFT process in the IFFTs 23-1 and 23-2 to be converted into signals in the time domain, are added thereto CP in the CP addition sections 24-1 and 24-2, and inputted to the power controllers 19-1 and 19-2, respectively.

On the other hand, outputs from the IFFTs 23-1 and 23-2 are also inputted to the peak power measurement device 16. The peak power measurement device 16 measures a peak power of a signal transmitted from each of the transmission antennas #0 and #1. In this example, the S/P converters 127-i and 128-i in the peak power controller 12 S/P-convert the symbols $S_0$, $S_1$ to be transmitted from the transmission antenna #0 and the symbols $-S_1^*$, $S_0^*$ to be transmitted from the transmission antenna #1, respectively. Therefore, there is no need to again perform the S/P conversion in order to measure a peak power of each symbol, unlike the above embodiments.

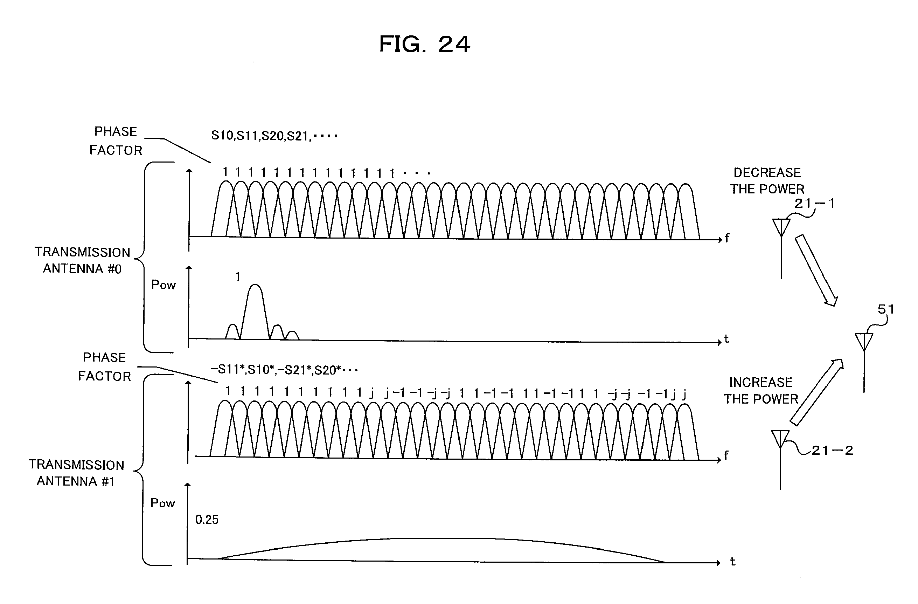

FIG. 24 illustrates an example of operation of the above-mentioned transmitter 10. In this case, with respect to the signal outputted from the transmission antenna #0, the symbol sequence obtained by the S/P converter 127-i in the peak power controller 12 is outputted as it remains intact to the mapper 22a-1, which corresponds to a case where all the phase factors of sub-carriers assigned to the transmission antenna #0 are 1. Therefore, in the case where all symbols transmitted from the transmission antenna #0 are 1, a time section in which the peak power is a maximum appears when the signal having been mapped on the sub-carriers is converted into the time domain.

To the contrary, with respect to a signal transmitted from the other transmission antenna #1, the phase factors (phase factors each for a combination in STC coding given to a pair of the complex multiplexers 129-i-1 and 129-i-2) for sub-carriers assigned to the transmission antenna #1 are set as illustrated in FIG. 24, for example. When symbols transmitted from the transmission antenna #1 are 1, the minimum peak power relative to the peak power of the transmission antenna #0 appears in the same time section. In other words, the phase factor for each STC code is set so as to minimize the peak power.

In this case, in a symbol time that the peak power from the transmission antenna #0 is a maximum and the peak power from the transmission antenna #1 is a minimum, the control amount arithmetic processor 18 determines transmission power control values that decrease the transmission power from the transmission antenna #0 and increase the transmission power from the transmission antenna #1. On such occasion, it is preferable that the transmission power control values make the signals transmitted from the transmission antennas #0 and #1 have the same and minimum values. Alternatively, the transmission power control values may be determined as values that make a sum of powers of two symbols transmitted from the transmission antennas #0 and #1 constant.

Conversely, in a symbol time that the peak power from the transmission antenna #0 is a minimum and the peak power from the transmission antenna #1 is a maximum, the control amount arithmetic processor 18 determines transmission power control values that increase the transmission power from the transmission antenna #0 and decrease the transmission power from the transmission antenna #1.

In the above example, the phase factor control is performed on each sub-carrier of signals transmitted from the transmission antenna #1. Reversely, the phase factor control may be performed on each sub-carrier of signals transmitted from the transmission antenna #0. Alternatively, the phase factor control may be performed on part of the sub-carriers assigned to each of the transmission antennas #0 and #1.

(Receiver configuration)

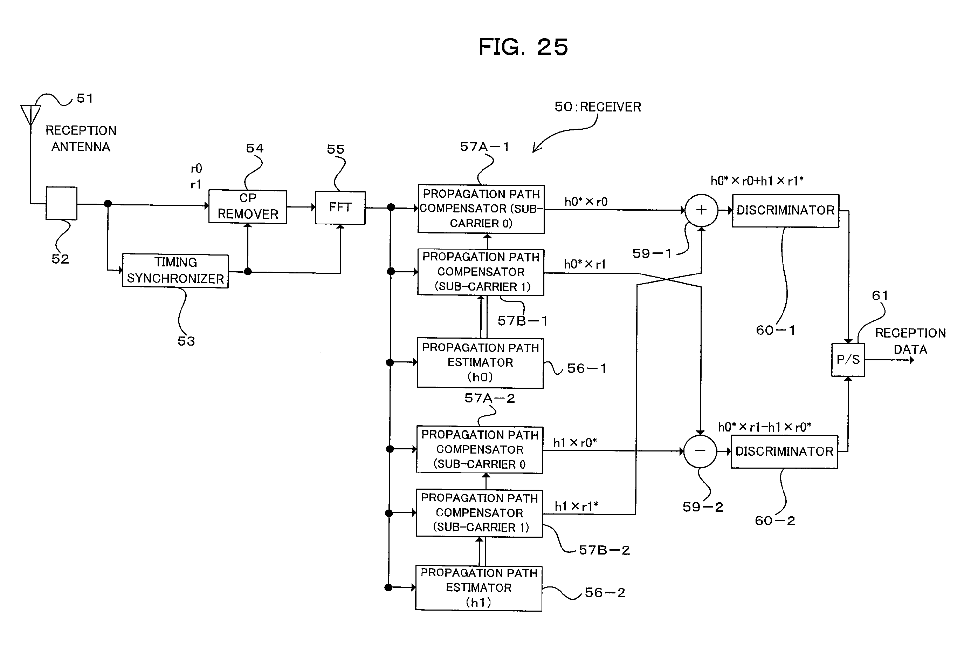

FIG. 25 is a block diagram illustrating an example of configuration of a receiver corresponding to the transmitter 10 of SFBC. The receiver 50 illustrated in FIG. 25 differs from the receiver 50 illustrated in FIG. 11 in that the receiver 50 has propagation path compensators 57A-1, 57B-1, 57A-2 and 57B-2 instead of the propagation path compensators 57-1 and 57-2, and dispenses with the delay circuits 58-1 and 58-2. Incidentally, when the propagation path compensators 57A-1, 57B-1, 57A-2 and 57B-2 are not discriminated from one another, the propagation path compensator will be referred to simply as the propagation path compensator 57.

The propagation path compensators 57 in this example perform propagation path compensation on sub-carriers adjacent to each other, corresponding to that a pair of transmission symbol sequences $S_0$ and $S_1$ (or $-S_1^*$ and $S_0^*$) are mapped on sub-carriers adjacent to each other in the transmitter 10.

For example, when one of the pair of the transmission sequences $S_0$ and $S_1$ (or $-S_1^*$ and $S_0^*$) is mapped on a sub-carrier having an even number while the other transmission sequence is mapped on a sub-carrier having an odd number, one 57A-1 (57A-2) of the propagation compensators 57A-1 (57A-2) performs propagation path compensation on the sub-carrier having an even number, while the other propagation compensator 57A-2 (57B-2) performs propagation path compensation on the sub-carrier having an odd number.

The propagation path compensators 57A-1 and 57B-1 perform the propagation path compensation on the basis of a channel value h0 estimated by the propagation path estimator 56-1. The channel value h0 is estimated by the propagation path estimator 56-1 on the basis of a pilot signal from the transmission antenna #0.

The propagation path compensators 57A-2 and 57B-2 perform the propagation path compensation on the basis of a channel value h1 estimated by the propagation path estimator 56-2. The channel value h1 is estimated by the propagation path estimator 56-2 on the basis of a pilot signal from the transmission antenna #1.

When a reception signal on a sub-carrier having an even number is expressed as r0 and a reception signal on a sub-carrier having an odd number is expressed as r1, the reception signal having undergone the propagation path compensation by the propagation path compensator 57A-1 can be expressed as h0*×r0, while the reception signal having undergone the propagation path compensation by the propagation path compensator 57B-1 can be expressed as h0*×r1. On the other hand, a reception signal having undergone the propagation path compensation by the propagation path compensator 57B-1 can be expressed as h1×r0*, while the reception signal having undergone the propagation path compensation by the propagation path compensator 57B-1 can be expressed as h1×r1*.

The reception signal (h0*×r0) having undergone the propagation path compensation by the propagation path compensator 57A-1 and the reception signal (h1×r1*) having undergone the propagation path compensation by the propagation path compensator 57B-2 are inputted to the adder 59-1.

On the other hand, the reception signal (h1×r0*) having undergone the propagation path compensation by the propagation path compensator 57A-2 and the reception signal (h0*×r1) having undergone the propagation path compensation by the propagation path compensator 57B-1 are inputted to the subtractor 59-2.

A reason why the delay circuits 58-1 and 58-2 illustrated in, for example, FIG. 11 are unnecessary is that a pair of transmission sequences $S_0$ and $S_1$ (or $-S_1$* and $S_0$*) are mapped on separate (adjacent) sub-carriers at the same time.

Therefore, the adder 59-1 adds the reception signal (h0*×r0) obtained by the propagation path compensator 57A-1 to the reception signal (h1×r1*) mapped at the same time and obtained by the propagation path compensator 57B-2. On the other hand, the subtractor 59-2 subtracts the reception signal (h1×r0*) mapped at the same time and obtained by the propagation path compensator 57A-2 from the reception signal (h0*×r1) obtained by the propagation path compensator 57B-1.

As a result of the above operation, a signal expressed as h0*×r0+h1×r1* is obtained at the output of the adder 59-1, while a signal expressed as h0*×r1-h1×r0* is obtained at the output of the subtractor 59-2. These signals are equivalent to outputs from the adder 58-1 and the subtractor 58-2 in the receiver 50 illustrated in, for example, FIG. 11.

The former signal has signal components corresponding to one of the signal sequences of the STC code, while the latter signal has signal components corresponding to the other signal sequence of the STC code.

These signals are discriminated (reception data determination) by the discriminators 60-1 and 60-2, converted into a serial signal by the P/S converter 61, and outputted as reception data. On this occasion, a signal containing signal components of the signal sequences of the transmission STC code, hence transmitter diversity gain can be obtained.

[5] Fifth Embodiment

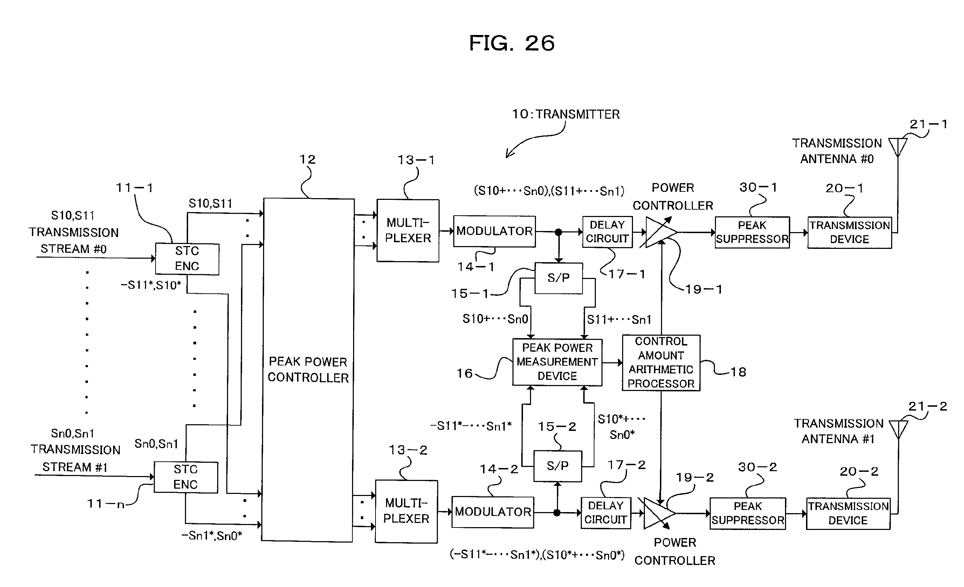

A peak suppressing process, which is a non-linear process, is not performed in above embodiments. The peak suppressing process is applicable to each of the embodiments. FIG. 26 illustrates an example of configuration of the transmitter 10 according to the first embodiment to which the peak suppressing process is applied.

The transmitter 10 illustrated in FIG. 26 has peak suppressors 30-1 and 30-2 corresponding to the transmission antennas #0 and #1 between power controllers 19-1 (19-2), and the transmission devices 20-1 (20-2), respectively. In FIG. 26, like reference characters designate like or corresponding parts in the preceding drawings unless specifically mentioned.

The peak suppressors 30-1 and 30-2 each performs a process to suppress the peak power of a transmission signal (modulation signal) having undergone the transmission power control by the power controller 19-1 or 19-2. As an example of the peak suppressing process, there is a method of multiplying a factor (window function) so that the maximum value (peak of amplitude) of a signal waveform in the time domain of the transmission signal does not exceed a predetermined threshold value.

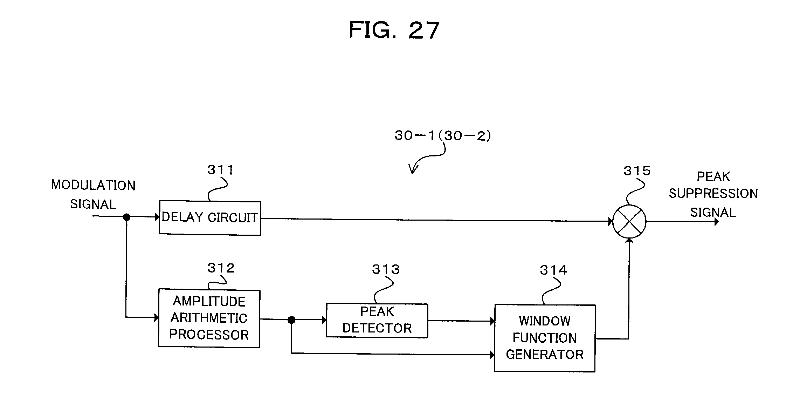

FIG. 27 illustrates an example of configuration of the peak suppressors 30-1 and 30-2 to which the above-mentioned method is applied. Each of the peak suppressors 30-1 and 30-2 illustrated in FIG. 27 has a delay circuit 311, an amplitude arithmetic processor 312, a peak detector 313, a window function generator 314 and a multiplier 315, for example.

The delay circuit 311 delays a transmission signal inputted from the power controller 19-1 or 19-2 by a predetermined time to adjust a timing at which the multiplier 315 multiplies the transmission signal by a factor given from the window function generator 314.

The amplitude arithmetic processor 312 samples a waveform of the transmission signal inputted from the power controller 19-1 or 19-2 at predetermined sampling intervals to discretely detect amplitude values of the transmission signal.

The peak detector 313 detects the maximum value (peak) of the amplitude values of the transmission signal and the sampling timing of the same from distribution of the amplitude values obtained by the amplitude arithmetic processor 312.

The window function generator 314 generates a factor (window function) having an appropriate distribution which decreases an amplitude level of the maximum value in order to decrease the maximum value detected by the peak detector 313 to a predetermined threshold value or below. As the window function, applicable is an arbitrary window function such as cosine function, raised cosine function, Hanning window, Humming window, Kaiser window or the like.

The multiplier 315 multiplies the transmission signal delayed in the delay circuit 311 by the function generated by the window function generator 314 to suppress the peak of the transmission signal. Whereby, the improvement of the PAPR can be further increased.

The transmission signal having undergone the peak suppressing process undergoes a predetermined wireless transmission process in the transmission device 20-1 or 20-2, and transmitted from the transmission antenna #0 or #1 to the receiver 50.

The peak suppressing process can be done with a filter such as a clipping filter.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a illustrating of the superiority and inferiority of the invention. Although the embodiment(s) has (have) been described in detail, it should be understood that the various changes, substitutions, and alterations could be made hereto without departing from the scope of the claims.

Appendices

As to the above described embodiments, the following appendices are disclosed.

(Appendix 1)

A transmitter (10) comprising:

a plurality of transmission antennas (21-1, 21-2);
an encoder (11-1 to 11-n) that performs space-time-coding on transmission signals to generate signal sequences to be transmitted from the separate transmission antennas (21-1, 21-2);
a phase controller (124) that controls a phase relationship between the signal sequences obtained through the space-time-coding so as to give a difference in peak power between a first signal sequence of the signal sequences to be transmitted from a first transmission antenna (21-1) and a second signal sequence of the signal sequences to be transmitted from a second transmission antenna (21-2);
a peak power measurement unit (16) that measures peak power of the first and second signal sequences whose phase relationship has been controlled; and
a transmission power controller (19-1, 19-2) that controls a transmission power of either one or both of the first and second signal sequences based on a result of the measurement so as to minimize a rate of a peak power of one of the signal sequences to an average transmission power of the first and second signal sequences.

(Appendix 2)

The transmitter according to Appendix 1, wherein the transmission power controller (19-1, 19-2) decreases a transmission power of either one of the first and second signal sequences generating a higher peak power, while increasing a transmission power of the other signal sequence generating a lower peak power, the first and second signal sequences being given a difference in the peak power.

(Appendix 3)

The transmitter according to Appendix 2, wherein the transmission power controller (19-1, 19-2) controls the transmission power of the first and second signal sequences so that a sum of the transmission power of the first and second signal sequences is constant.

(Appendix 4)

The transmitter according to any one of Appendices 1 through 3, wherein the transmission power controller (19-1, 19-2) controls the transmission power so as to satisfy predetermined conditions under which an orthogonal relationship between the first and second signal sequences is kept.

(Appendix 5)

The transmitter according to Appendix 4 further comprising a transmission power control amount notifier (27-1, 27-2) that notifies a receiver (50) receiving the first and second signal sequences of power control amounts for the transmission power satisfying the predetermined conditions.

(Appendix 6)

The transmitter according to any one of Appendices 1 through 5, wherein the control on the phase relationship includes a phase control on sub-carriers on which the signal sequences transmitted from each of the transmission antennas (21-1, 21-2) are mapped.

(Appendix 7)

The transmitter according to any one of Appendices 1 through 5, wherein the control on the phase relationship includes a phase control on orthogonal codes by which the signal sequences transmitted from each of the transmission antennas (21-1, 21-2) are multiplied.

(Appendix 8)

The transmitter according to Appendix 1 further comprising:

a signal exchanger (28) that exchanges an element signal in the first signal sequence for an element signal of the second signal sequence or vice versa between the transmission antennas (21-1, 21-2) based on a relationship of magnitudes between the peak power measured by the peak power measurement unit (16) so as to satisfy the predetermined conditions under which the orthogonal relationship between the first and second signal sequences is kept.

(Appendix 9)

The transmitter according to Appendix 8 further comprising a signal exchange information notifier (29-1, 29-2) that notifies the receiver (50) receiving the first and second signal sequences of whether or not the signal exchange has been done.

(Appendix 10)

The transmitter according to Appendix 1 further comprising:

a mapper (22-1, 22-2, 22a-1, 22a-2) that maps the first and second signal sequences whose phase relationship has been controlled onto separate sub-carriers; and
an inverse fast Fourier transform (IFFT) processor (23-1, 23-2) that converts the first and second signal sequences mapped on the sub-carriers into a time domain; wherein
the peak power measurement unit (16) measures peak power of the first and second signal sequences converted into the time domain.

(Appendix 11)

The transmitter according to any one of Appendices 1 through 10 further comprising a peak suppressor (30-1, 30-2) that performs a peak suppression process on the first and second signal sequences having undergone the transmission power control.

(Appendix 12)

A receiver (50) comprising:

a receiver (52) that receives a signal from a transmitter (10) controlling a phase relationship between a first signal sequence transmitted from a first transmission antenna (21-1) and a second signal sequence transmitted from a second transmission antenna (21-2) of signal sequences obtained by performing space-time-coding on transmission signals so as to give a difference in peak power between the first and the second signal sequences;
a propagation path estimator (56-1, 56-2) that estimates propagation paths from the respective transmission antennas (21-1, 21-2) based on known reception signals from the respective transmission antennas (21-1, 21-2);
a phase corrector (572-3) that performs phase correction according to control information about the phase relationship on a result of estimation made by the propagation path estimator (56-2);
a propagation path compensator (57-1, 57-2) that performs propagation path compensation on a signal sequence received by the receiver (52) based on a result of estimation corrected by the phase corrector (572-3) to separate the signal sequence into signal sequences from the respective transmission antennas (21-1, 21-2); and
a decoder (59-1, 59-2, 60-1, 60-2) that performs addition and subtraction on the signal sequences having undergone the propagation path compensation to decode the signal sequences.

(Appendix 13)

The receiver according to Appendix 12 further comprising:

a power corrector (63-1, 63-2) that corrects power of the separated signal sequences according to power control amounts with which the transmission power have been controlled in the transmitter (10) so as to satisfy that the predetermined conditions under which the orthogonal relationship between the first and second signal sequences is kept.

(Appendix 14)

The receiver according to Appendix 12, wherein the power control amounts are notified from the transmitter (10).

(Appendix 15)

The receiver according to Appendix 12, wherein the transmitter (10) maps the first and second signal sequences whose phase relationship is controlled onto separate sub-carriers, converts the first and second signal sequences into a time domain, and transmits the first and second signal sequences; and
the propagation path compensator (57-1, 57-2) performs the propagation compensation on each of the separate sub-carriers.

(Appendix 16)

The receiver according to Appendix 12, wherein the propagation path compensator (57-1, 57-2) performs an exchange control on reception signals to be subjected to the propagation path compensation according to whether or not an element signal in the first signal sequence and an element signal in the second signal sequence have been exchanged for one another between the transmission antennas (21-1, 21-2) in the transmitter (10) so as to satisfy the predetermined conditions under which the orthogonal relationship between the first and second signal sequences is kept.

(Appendix 17)

A transmission method comprising:

performing space-time-coding on transmission signals to generate signal sequences to be transmitted from separate transmission antennas (21-1, 21-2);
controlling a phase relationship between a first signal sequence to be transmitted from a first transmission antenna (21-1) and a second signal sequence to be transmitted from a second transmission antenna (21-2) of the signal sequences obtained through the space-time-coding so as to give a difference in peak power between the first and second signal sequences;
measuring peak power of the first and second signal sequences whose phase relationship has been controlled; and

controlling transmission power of either one or both of the first and second signal sequences based on a result of measurement so as to minimize a rate of a peak power of one of the signal sequences to an average transmission power of the first and second signal sequences.

(Appendix 18)

A reception method comprising:

receiving a signal from a transmitter (10) controlling a phase relationship between a first signal sequence to be transmitted from a first transmission antenna (21-1) and a second signal sequence to be transmitted from a second transmission antenna (21-2) of signal sequences obtained by performing space-time-coding on transmission signals so as to give a difference in peak power between the first and second signal sequences;
estimating propagation paths from the respective transmission antennas (21-1, 21-2) based on known received signals from the respective transmission antennas (21-1, 21-2);
performing phase correction according to control information about the phase relationship on a result of propagation path estimation;
performing propagation path compensation on a received signal sequence based on a result of propagation path estimation corrected through the phase correction to separate the received signal sequence into the signal sequences from the respective transmission antennas (21-1, 21-2); and
performing addition and subtraction on the signal sequences having undergone propagation path compensation to decode the signal sequences.

**Claims**

1. A transmitter (10) comprising:

a plurality of transmission antennas (21-1, 21-2);
an encoder (11-1 to 11-n) arranged to perform space-time-coding on transmission signals to generate signal sequences to be transmitted from the separate transmission antennas (21-1, 21-2);
a phase controller (124) arranged to control a phase relationship between the signal sequences obtained through the space-time-coding so as to give a difference in peak power between a first signal sequence of the signal sequences to be transmitted from a first transmission antenna (21-1) and a second signal sequence of the signal sequences to be transmitted from a second transmission antenna (21-2);
a peak power measurement unit (16) arranged to measure peak power of the first and second signal sequences whose phase relationship has been controlled; and
a transmission power controller (19-1, 19-2) arranged to control a transmission power of either one or both of the first and second signal sequences based on a result of the measurement so as to minimize a rate of a peak power of one of the signal sequences to an average transmission power of the first and second signal sequences.

2. The transmitter according to claim 1, wherein the transmission power controller (19-1, 19-2) is arranged to decrease a transmission power of either one of the first and second signal sequences generating a higher peak power, while increasing a transmission power of the other signal sequence generating a lower peak power, the first and second signal sequences being given a difference in the peak power.

3. The transmitter according to claim 2, wherein the transmission power controller (19-1, 19-2) is arranged to control the transmission power of the first and second signal sequences so that a sum of the transmission power of the first and second signal sequences is constant.

4. The transmitter according to any one of claims 1 through 3, wherein the transmission power controller (19-1, 19-2) is arranged to control the transmission power so as to satisfy predetermined conditions under which an orthogonal relationship between the first and second signal sequences is kept.

5. The transmitter according to claim 4 further comprising a transmission power control amount notifier (27-1, 27-2) arranged to notify a receiver (50) receiving the first and second signal sequences of power control amounts for the transmission power satisfying the predetermined conditions.

6. The transmitter according to any one of claims 1 through 3, wherein the control on the phase relationship includes a phase control on sub-carriers on which the signal sequences transmitted from each of the transmission antennas (21-1, 21-2) are mapped.

7. The transmitter according to any one of claims 1 through 3, wherein the control on the phase relationship includes a phase control on orthogonal codes by which the signal sequences transmitted from each of the transmission antennas (21-1, 21-2) are multiplied.

8. The transmitter according to any preceding claim further comprising:

a signal exchanger (28) arranged to exchange an element signal in the first signal sequence for an element signal of the second signal sequence or vice versa between the transmission antennas (21-1, 21-2) based on a relationship of magnitudes between the peak power measured by the peak power measurement unit (16) so as to satisfy the predetermined conditions under which the orthogonal relationship between the first and second signal sequences is kept.

9. The transmitter according to claim 8 further comprising a signal exchange information notifier (29-1, 29-2) for notifying the receiver (50) receiving the first and second signal sequences of whether or not the signal exchange has been done.

10. The transmitter according to any preceding claim further comprising:

a mapper (22-1, 22-2, 22a-1, 22a-2) arranged to map the first and second signal sequences whose phase relationship has been controlled onto separate sub-carriers; and
an inverse fast Fourier transform (IFFT) processor (23-1, 23-2) for converting the first and second signal sequences mapped on the sub-carriers into a time domain; wherein
the peak power measurement unit (16) is arranged to measure peak power of the first and second signal sequences converted into the time domain.

11. The transmitter according to any preceding claim further comprising a peak suppressor (30-1, 30-2) for performing a peak suppression process on the first and second signal sequences having undergone the transmission power control.

12. A receiver (50) comprising:

a receiver (52) arranged to receive a signal from a transmitter (10) controlling a phase relationship between a first signal sequence transmitted from a first transmission antenna (21-1) and a second signal sequence transmitted from a second transmission antenna (21-2) of signal sequences obtained by performing space-time-coding on transmission signals so as to give a difference in peak power between the first and the second signal sequences;
a propagation path estimator (56-1, 56-2) for estimating propagation paths from the respective transmission antennas (21-1, 21-2) based on known reception signals from the respective transmission antennas (21-1, 21-2);
a phase corrector (572-3) arranged to perform phase correction according to control information about the phase relationship on a result of estimation made by the propagation path estimator (56-2);
a propagation path compensator (57-1, 57-2) arranged to perform propagation path compensation on a signal sequence received by the receiver (52) based on a result of estimation corrected by the phase corrector (572-3) to separate the signal sequence into signal sequences from the respective transmission antennas (21-1, 21-2); and
a decoder (59-1, 59-2, 60-1, 60-2) arranged to perform addition and subtraction on the signal sequences having undergone the propagation path compensation to decode the signal sequences.

13. The receiver according to claim 12 further comprising:

a power corrector (63-1, 63-2) arranged to correct power of the separated signal sequences according to power control amounts with which the transmission power have been controlled in the transmitter (10) so as to satisfy that the predetermined conditions under which the orthogonal relationship between the first and second signal sequences is kept.

14. A transmission method comprising:

performing space-time-coding on transmission signals to generate signal sequences to be transmitted from separate transmission antennas (21-1, 21-2);

controlling a phase relationship between a first signal sequence to be transmitted from a first transmission antenna (21-1) and a second signal sequence to be transmitted from a second transmission antenna (21-2) of the signal sequences obtained through the space-time-coding so as to give a difference in peak power between the first and second signal sequences;

measuring peak power of the first and second signal sequences whose phase relationship has been controlled; and

controlling transmission power of either one or both of the first and second signal sequences based on a result of measurement so as to minimize a rate of a peak power of one of the signal sequences to an average transmission power of the first and second signal sequences.

15. A reception method comprising:

receiving a signal from a transmitter (10) controlling a phase relationship between a first signal sequence to be transmitted from a first transmission antenna (21-1) and a second signal sequence to be transmitted from a second transmission antenna (21-2) of signal sequences obtained by performing space-time-coding on transmission signals so as to give a difference in peak power between the first and second signal sequences;

estimating propagation paths from the respective transmission antennas (21-1, 21-2) based on known received signals from the respective transmission antennas (21-1, 21-2);

performing phase correction according to control information about the phase relationship on a result of propagation path estimation;

performing propagation path compensation on a received signal sequence based on a result of propagation path estimation corrected through the phase correction to separate the received signal sequence into the signal sequences from the respective transmission antennas (21-1, 21-2); and

performing addition and subtraction on the signal sequences having undergone propagation path compensation to decode the signal sequences.

# FIG. 1

# FIG. 2

TRANSMISSION
ANTENNA #0

| S10+⋯Sn0 | S11+⋯Sn1 |
|---|---|

→ t

PAPR LARGE
(SMALL)

PAPR LARGE
(SMALL)

PAPR SMALL
(LARGE)

PAPR SMALL
(LARGE)

TRANSMISSION
ANTENNA #1

| −S11*−⋯Sn1* | S10*+⋯Sn0* |
|---|---|

→ t

EP 2 136 498 A2

# FIG. 3

12

S10,S11
S20,S21
·
·
·
·
·
·
·
Sn0,Sn1

} TRANSMISSION ANTENNA #0

122-1

−S11*,S10*
−S21*,S20*
·
·

−S11* × exp(j θ 1),
S10* × exp(j θ 1)
−S21* × exp(j θ 2),
S20* × exp(j θ 2)

122-1

122-(n−1)

−Sn1*,Sn0*

} TRANSMISSION ANTENNA #1

122-n

−Sn1* × exp(j θ n),
Sn0* × exp(j θ n)

····

PHASE FACTOR GENERATOR  121

FIG. 4

# FIG. 5

# FIG. 6

## FIG. 7

EP 2 136 498 A2

FIG. 8

EP 2 136 498 A2

FIG. 9

# FIG. 10

SYMBOL
t=0

SYMBOL
t=1

t=0: DECREASE
THE POWER

#0

TRANSMISSION
ANTENNA #0

Pow

1

t

t=1: INCREASE
THE POWER

#1

TRANSMISSION
ANTENNA #1

Pow

CHIP

0.25

t

EP 2 136 498 A2

FIG. 11

# FIG. 12

57-1

PROPAGATION PATH COMPENSATOR(h0)

571-1

PROPAGATION
PATH ESTIMATION
VALUE(h0)

57-2

PROPAGATION PATH COMPENSATOR(h1)

572-1

SUB-CARRIER
PHASE
SETTER

572-3

PROPAGATION
PATH ESTIMATION
VALUE(h1)

572-2

## FIG. 13

EP 2 136 498 A2

FIG. 14

FIG. 15

EP 2 136 498 A2

## FIG. 16

**TRANSMISSION ANTENNA #0**

| | S10 | S11 |
|---|---|---|
| PILOT #0 | S20 | S21 |
| | S30 | S31 |
| k00 | | |
| | | |
| k10 | | |
| | | |
| | | |
| | | |
| PILOT #0 | Sn0 | Sn1 |

**TRANSMISSION ANTENNA #1**

| PILOT #1 | −S11* | S10* |
|---|---|---|
| | −S21* | S20* |
| k11 | −S31* | S30* |
| | | |
| k01 | | |
| | | |
| | | |
| | | |
| PILOT #1 | | |
| | −Sn1* | Sn0* |

# FIG. 17

50 : RECEIVER

RECEPTION ANTENNA — 51

r0,r1

TIMING SYNCHRONIZER — 53

CP REMOVER — 54

FFT — 55

CONTROL AMOUNT STORING DEVICE — 62-1

k00,k10

PROPAGATION PATH COMPENSATOR — 57-1

PROPAGATION PATH ESTIMATOR (h0) — 56-1

$h0^* \times k00 \times r0,$
$h0^* \times k10 \times r1$

63-1

DELAY CIRCUIT — 58-1

59-1

DISCRIMINATOR — 60-1

CONTROL AMOUNT STORING DEVICE — 62-2

k11,k01

PROPAGATION PATH COMPENSATOR — 57-2

PROPAGATION PATH ESTIMATOR (h1) — 56-2

63-2

$h1 \times k11 \times r0^*,$
$h1 \times k01 \times r1^*$

DELAY CIRCUIT — 58-2

59-2

DISCRIMINATOR — 60-2

P/S — 61

RECEPTION DATA

52

EP 2 136 498 A2

41

# FIG. 18

10: TRANSMITTER

SYMBOL EXCHANGER

TRANSMISSION ANTENNA #0    21-1

TRANSMISSION STREAM #0

STC ENC    11-1

PEAK POWER CONTROLLER    12

MULTI-PLEXER    13-1

MODULATOR    14-1

POWER CONTROLLER    19-1

S/P    281-1

P/S    282-1

PILOT INSERTER

TRANSMISSION DEVICE    20-1

S/P    15-1

SW    283

29-1

PEAK POWER MEASUREMENT DEVICE    16

CONTROL AMOUNT ARITHMETIC PROCESSOR    18

RECEIVER    50

51

S/P    15-2

TRANSMISSION STREAM #n

STC ENC    11-n

MULTI-PLEXER    13-2

MODULATOR    14-2

POWER CONTROLLER    19-2

S/P    281-2

P/S    282-2

PILOT INSERTER    29-2

TRANSMISSION DEVICE    20-2

TRANSMISSION ANTENNA #1    21-2

28

EP 2 136 498 A2

42

## FIG. 19

EP 2 136 498 A2

TRANSMISSION
ANTENNA #0

| S10+···Sn0 LARGE (SMALL) | S11+···Sn1 LARGE (SMALL) |
|---|---|

→ t

| S10+···Sn0 |
|---|

→ t

| S11+···Sn1 |
|---|

→ t

→

| S10+···Sn0 |
|---|

→ t

| S11+···Sn1 |
|---|

→ t

| S10+···Sn0 LARGE (SMALL) | S11+···Sn1 LARGE (SMALL) |
|---|---|

→ t

TRANSMISSION
ANTENNA #1

| −S11*−···Sn1* SMALL (LARGE) | S10*+···Sn0* SMALL (LARGE) |
|---|---|

→ t

| −S11*−···Sn1* |
|---|

→ t

| S10*+···Sn0* |
|---|

→ t

→

| −S11*−···Sn1* |
|---|

→ t

| S10*+···Sn0* |
|---|

→ t

| −S11*−···Sn1* SMALL (LARGE) | S10*+···Sn0* SMALL (LARGE) |
|---|---|

→ t

# FIG. 20

TRANSMISSION
ANTENNA #0

| S10+···Sn0 LARGE (SMALL) | S11+···Sn1 SMALL (LARGE) |
|---|---|

t

| S10+···Sn0 |
|---|

t

| S11+···Sn1 |
|---|

t

TRANSMISSION
ANTENNA #1

| −S11*−···Sn1* LARGE (SMALL) | S10*+···Sn0* SMALL (LARGE) |
|---|---|

t

| −S11*−···Sn1* |
|---|

t

| S10*+···Sn0* |
|---|

t

| S10+···Sn0 |
|---|

t

| −S11*−···Sn1* |
|---|

t

| S10+···Sn0 LARGE (SMALL) | −S11*−···Sn1* LARGE (SMALL) |
|---|---|

t

| S11+···Sn1 |
|---|

t

| S10*+···Sn0* |
|---|

t

| S11+···Sn1 SMALL (LARGE) | S10*+···Sn0* SMALL (LARGE) |
|---|---|

t

# FIG. 21

EP 2 136 498 A2

NON-EXCHANGED | EXCHANGED

OFDM SYMBOL

**TRANSMISSION ANTENNA #0**

| PILOT #0 | PILOT #0 | PILOT #0 | PILOT #0 |
|----------|----------|----------|----------|
| S10 | S11 | S10 | −S11* |
| S20 | S21 | S20 | −S21* |
| S30 | S31 | S30 | −S31* |
| | | | |
| | | | |
| | | | |
| | | | |
| | | | |
| | | | |
| Sn0 | Sn1 | Sn0 | −Sn1* |

**TRANSMISSION ANTENNA #1**

| PILOT #1 | PILOT #1 | −PILOT #1 | −PILOT #1 |
|----------|----------|-----------|-----------|
| −S11* | S10* | S11 | S10* |
| −S21* | S20* | S21 | S20* |
| −S31* | S30* | S31 | S30* |
| | | | |
| | | | |
| | | | |
| | | | |
| | | | |
| | | | |
| −Sn1* | Sn0* | Sn1 | Sn0* |

FIG. 22

50:RECEIVER

RECEPTION ANTENNA — 51

52

TIMING SYNCHRONIZER — 53

r0,r1

CP REMOVER — 54

FFT — 55

PILOT DETECTOR — 64

PROPAGATION PATH COMPENSATOR — 57-1

PROPAGATION PATH ESTIMATOR (h0) — 56-1

PROPAGATION PATH COMPENSATOR — 57-2

PROPAGATION PATH ESTIMATOR (h1) — 56-2

$h0^* \times k00 \times r0$, $h0^* \times k10 \times r1$

$h1 \times k11 \times r0^*$, $h1 \times k01 \times r1^*$

DELAY CIRCUIT — 58-1

DELAY CIRCUIT — 58-2

59-1 +

59-2 −

DISCRIMINATOR — 60-1

DISCRIMINATOR — 60-2

P/S — 61

RECEPTION DATA

FIG. 23

# FIG. 24

# FIG. 25

EP 2 136 498 A2

FIG. 26

FIG. 27

30−1(30−2)

MODULATION
SIGNAL

311
DELAY CIRCUIT

315
PEAK
SUPPRESSION
SIGNAL

312
AMPLITUDE
ARITHMETIC
PROCESSOR

313
PEAK
DETECTOR

314
WINDOW
FUNCTION
GENERATOR

EP 2 136 498 A2

**REFERENCES CITED IN THE DESCRIPTION**

**Patent documents cited in the description**

- JP 2007028092 A
- JP 2004173258 A
- JP 2001094530 A